(19) **Europäisches Patentamt**
**European Patent Office**
**Office européen des brevets**

(11) **EP 3 002 811 B1**

(12) **EUROPEAN PATENT SPECIFICATION**

(45) Date of publication and mention
of the grant of the patent:
**28.06.2017 Bulletin 2017/26**

(51) Int Cl.:
***H01M 8/1246*** (2016.01)  ***H01M 8/0217*** (2016.01)
***H01M 8/2425*** (2016.01)  ***H01M 8/0226*** (2016.01)
***H01M 8/124*** (2016.01)

(21) Application number: **15187535.8**

(22) Date of filing: **30.09.2015**

(54) **SOLID OXIDE FUEL CELL STACK**

FESTOXIDBRENNSTOFFZELLENSTAPEL

PILE A COMBUSTIBLE D'OXYDE SOLIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2014 JP 2014202411
31.03.2015 JP 2015074375**

(43) Date of publication of application:
**06.04.2016 Bulletin 2016/14**

(73) Proprietor: **Toto Ltd.
Kitakyushu-shi, Fukuoka 802-8601 (JP)**

(72) Inventors:
• **KAKINUMA, Yasuo**
**Kokurakita-ku, Kitakyushi-shi, Fukuoka
802-8601 (JP)**
• **OKAMOTO, Osamu**
**Kokurakita-ku, Kitakyushi-shi, Fukuoka
802-8601 (JP)**
• **ANDO, Shigeru**
**Kokurakita-ku, Kitakyushi-shi, Fukuoka
802-8601 (JP)**
• **MURAKAMI, Hironobu**
**Kokurakita-ku, Kitakyushi-shi, Fukuoka
802-8601 (JP)**
• **FURUYA, Seiki**
**Kokurakita-ku, Kitakyushi-shi, Fukuoka
802-8601 (JP)**
• **MOMIYAMA, Yutaka**
**Kokurakita-ku, Kitakyushi-shi, Fukuoka
802-8601 (JP)**
• **HAYAMA, Kiyoshi**
**Kokurakita-ku, Kitakyushi-shi, Fukuoka
802-8601 (JP)**
• **WATANABE, Naoki**
**Kokurakita-ku, Kitakyushi-shi, Fukuoka
802-8601 (JP)**
• **TANAKA, Shuhei**
**Kokurakita-ku, Kitakyushi-shi, Fukuoka
802-8601 (JP)**
• **ISAKA, Nobuo**
**Kokurakita-ku, Kitakyushi-shi, Fukuoka
802-8601 (JP)**
• **HOSHIKO, Takuya**
**Kokurakita-ku, Kitakyushi-shi, Fukuoka
802-8601 (JP)**
• **SATO, Masaki**
**Kokurakita-ku, Kitakyushi-shi, Fukuoka
802-8601 (JP)**

(74) Representative: **ABG Patentes, S.L.
Avenida de Burgos, 16D
Edificio Euromor
28036 Madrid (ES)**

(56) References cited:
**WO-A1-2014/100470     JP-A- 2010 186 645
JP-A- 2010 212 036     KR-A- 20130 077 808**

**Description**

FIELD OF INVENTION

The present invention relates to a solid oxide fuel cell stack. More specifically, the present invention relates to a solid oxide fuel cell stack including an interconnector that has a good gas sealing property and adhesion to a solid electrolyte, especially has an excellent electrical conductivity and an oxide ion insulating property.

BACKGROUND ART

Fuel cells are energy converters that, unlike heat engines which go through heat energy and kinetic energy processes, include reacting fuels such as natural gas and hydrogen with oxygen in the air through a solid electrolyte and continuously and directly obtaining electric energy from chemical energy possessed by fuels. Among them, solid oxide fuel cells are fuel cells that operate as cells including a solid oxide (ceramic) as a solid electrolyte, a fuel electrode as a negative electrode, and an air electrode as a positive electrode. Further, solid oxide fuel cells are known as having an advantage that a high energy conversion efficiency can be obtained.

In solid oxide fuel cells, the output per unit cell is so low that power generation is carried out by enhancing output through connection of a plurality of unit cells in series. Members through which adjacent unit cells are electrically connected are called "interconnectors." Interconnectors using ceramics as material, hereinafter referred to also as "ceramic interconnectors", are known. Gas sealing property high enough to prevent gas permeation, electrical conductivity, oxide ion insulating property, and adhesion to solid electrolyte are required as properties of ceramic interconnectors.

In general, the ceramic interconnector cannot provide satisfactory electrical conductivity unless the thickness is small, for example, approximately not more than 100 $\mu$m. When an attempt is made to form a ceramic interconnector having a reduced small thickness so as to obtain satisfactory electrical conductivity on a surface of porous electrodes such as fuel electrodes and air electrodes, there is a possibility that the ceramic interconnector is disadvantageously incorporated into the porous electrode. This leads to a disadvantage of a possibility that the ceramic interconnector cannot be formed or a possibility that, even when the ceramic interconnector can be formed, the thickness is so small that satisfactory gas sealing properties cannot be obtained.

When the gas sealing property of a ceramic interconnector is low, the fuel gas is disadvantageously leaked from the fuel electrode side of the ceramic interconnector to the air electrode side, resulting in mixing with air. In order to enhance the gas sealing property of the ceramic interconnector, the denseness of the ceramic interconnector should be increased. To this end, the ceramic interconnector should be densely sintered. When the electrical conductivity of the ceramic interconnector is low, the resistance of the ceramic interconnector is so high that the output of the fuel cell is disadvantageously lowered. Further, when the oxide ion insulating property of the ceramic interconnector is low, the oxide ions are disadvantageously leaked from the air electrode side to the fuel electrode side of the interconnector, leading to a lowered efficiency of the fuel cell. In addition, when the adhesion between the solid electrolyte and a ceramic interconnector is low, disadvantageously, gaps such as cracking occur between the solid electrolyte and the ceramic interconnector, resulting in leakage of the fuel gas through the gaps.

Lanthanum chromite(LaCrO$_3$)-based interconnectors have widely been used as materials for ceramic interconnector. It is known that the LaCrO$_3$-based interconnectors have a high electrical conductivity but cannot be sintered without difficulties. Further, since chromium (Cr) is contained, there is a possibility that the so-called Cr poisoning occurs.

Further, SLT-based interconnectors represented by SrLaTiO$_{3-\delta}$ have widely been used as materials for ceramic interconnectors. It is known that the SLT-based interconnectors have lower electrical conductivity but have better sinterability as compared with the LaCrO$_3$-based interconnectors. In the SLT-based interconnectors, for example, the electrical conductivity is developed by replacing Sr site in the crystal lattice of SrTiO$_3$, that is an insulator, with lanthanum (La) to give SrLaTiO$_3\delta$ (SLT), thereby converting a part of Ti$^{4+}$ in Ti site in the crystal lattice of SrLaTiO$_3\delta$ (SLT) to Ti$^{3+}$. $\delta$ is a value that is required to meet a neutral condition of the electric charge.

JP2013-030270A (PTL 1) reports that, when an interconnector containing strontium titanate is fired together with a base containing a transition metal oxide such as NiO, the transition metal component contained in the base is diffused, disadvantageously resulting in reduced electrically conductive carriers due to charge compensation that causes a lowering in electrical conductivity of the interconnector.

JP2010-212036A (PTL 2) discloses that, in order to form an interconnector that is free from elements adversely affecting cell performance and can simultaneously realize low reduction-induced expansion and high electrically conductivity, a structure of two layers being different from each other in composition is adopted in which a portion having a different reduction-induced expansion is formed of a perovskite oxide represented by La$_{1-x}$Sr$_x$Ti$_{1-y}$Fe$_y$O$_{3-\delta}$ (LSTF oxide) so that the reduction-induced expansion is stepwise increased or decreased. This patent literature discloses that a composition gradient interconnector having a two-layer structure has been prepared by diffusion junction through pressure firing of two types of LSTF oxides different from each other in composition.

As far as the present inventors know, the interconnector described in PTL 2 develops oxide ion conductivity due to a high composition ratio of iron, rendering the interconnector difficult to be used as a interconnector. Any of the patent literatures cannot realize the manufacture of a solid oxide fuel cell stack including a ceramic interconnector that especially has an excellent electrical conductivity and an oxide ion insulating property.

Citation List

Patent Literature

[PTL 1] JP2013-030270A
[PTL 2]JP2010-212036A

JP 2010-186645 A discloses a solid oxide fuel cell stack comprising an interconnector an interconnector formed of a perovskite oxide represented by formula $(Ln_{1-x}Ae_x)MO_3$ wherein Ln is a lanthanoid, Ae may be Sr, Ba and Ca, M may be Ti, Zr, Al, Ga, Nb, Ta, Fe, Co, Ni, Cu, Mn, Mg, Rh, Pd, Pt, and Au, and $0 \leq x \leq 1$.

SUMMARY OF THE INVENTION

It has been found through experiments conducted by the present inventors that the replacement of titanium (Ti) site in SLT with iron (Fe) as an electrically conductive carrier can allow the electrical conductivity to be less likely to be lowered even when nickel (Ni) is dissolved as a solid solution in SLT. On the other hand, the replacement of Ti site with Fe causes oxygen deficiency, disadvantageously leading to the development of oxide ion conductivity. As a result, it has been found that leakage of oxide ions leads to fuel consumption, resulting in lowered power generation efficiency.

The present inventors have now found that the development of oxide ion conductivity due to oxygen deficiency can be suppressed by further replacing Ti site in SLT that has been already replaced with Fe, with niobium (Nb). It has been further found that the development of oxide ion conductivity derived from the replacement with Fe can be suppressed while suppressing the lowering in electrical conductivity of the interconnector due to the dissolution of Ni as a solid solution (that is, an oxide ion insulating property can be provided) by adopting a specific composition ratio of Fe and Nb that are introduced for replacement in SLT. The present invention has been made based on such findings.

Thus, an object of the present invention is to provide a sold oxide fuel cell including a ceramic interconnector that especially has an excellent electrical conductivity and an oxide ion insulating property.

According to the present invention, there is provided a solid oxide fuel cell stack comprising at least:

a plurality of power generation elements, each of which including at least a fuel electrode, a solid electrolyte, and an air electrode stacked in that order; and
an interconnector that electrically connects the air electrode in one of adjacent power generation elements in the plurality of power generation elements to the fuel electrode in the other power generation element, the plurality of power generation elements being connected in series to each other, wherein
the interconnector is formed of a perovskite oxide represented by formula (1):

$$Sr_aLa_bTi_{1-c-d}Nb_cFe_dO_{3-\delta} \qquad \text{formula (1)}$$

wherein a, b, c, and d are a positive real number that satisfies $0.1 \leq a \leq 0.8$, $0.1 \leq b \leq 0.8$, $0.05 \leq c \leq 0.2$, and $0.2 \delta$ $d \leq 0.5$, and the oxygen content ($3-\delta$) is not more than 3.00, and the content of the perovskite oxide represented by the formula(1) in the interconnector is not less than 80% by mole.

BRIEF DESCRIPTION OF THE DRAWINGS

[Fig. 1A] is a front view of a horizontal-striped solid oxide fuel cell stack according to the present invention.
[Fig. 1B] is a cross-sectional schematic view of four adjacent power generation elements constituting a solid oxide fuel cell stack according to the present invention.
[Fig. 2] is a partial cross-sectional view of a vertical-striped solid oxide fuel cell unit constituting a vertical-striped solid oxide fuel cell stack according to the present invention.
[Fig. 3] is a perspective view illustrating a vertical-striped solid oxide fuel cell stack according to the present invention.

[Fig. 4] is a cross-sectional schematic view illustrating four adjacent power generation elements constituting a solid oxide fuel cell stack according to the present invention.

[Fig. 5] is a view illustrating one embodiment of a solid oxide fuel cell stack according to the present invention.

[Fig. 6] is a SEM photograph of an interconnector that connects power generation elements constituting a solid oxide fuel cell stack according to the present invention.

[Fig. 7] is a flow chart illustrating a manufacturing process of a solid oxide fuel cell stack according to the present invention.

[Fig. 8] is a cross-sectional view illustrating an area including two adjacent power generation elements formed in each manufacturing process of a solid oxide fuel cell stack according to the present invention.

[Fig. 9] is a cross-sectional view illustrating an area including two adjacent power generation elements formed in each manufacturing process of a solid oxide fuel cell stack according to the present invention.


DESCRIPTION OF THE INVENTION

Definition

The solid oxide fuel cell stack according to the present invention refers to a solid oxide fuel cell stack that, as long as the composition of the interconnector meets requirements described later, is usually classified or understood as a solid oxide fuel cell stack in the art. The solid oxide fuel cell stack includes at least a plurality of power generation elements, each including at least the fuel electrode, the solid electrolyte, and the air electrode stacked in that order, and the interconnector that electrically connects an air electrode in one of the two adjacent power generation elements in the plurality of power generation elements to a fuel electrode in the other power generation element. The shape of the solid oxide fuel cell stack according to the present invention is not limited and may be, for example, a cylindrical shape or a hollow platelike shape with a plurality of gas flow paths formed therein.

The expression "adjacent" or "provided adjacent" as used herein means that a plurality of contemplated elements do not include other contemplated element therebetween that is the same type as the contemplated element. Other elements other than the contemplated elements may be included between the contemplated elements. For example, an additional power generation element is not included between one of the adjacent power generation elements and the other power generation element. However, for example, an interconnector can be included between one of the adjacent power generation elements and the other power generation element.

The solid oxide fuel cell stack according to the present invention refers to both so-called vertical-striped solid oxide fuel cell and horizontal-striped solid oxide fuel cell. In the present invention, the vertical-striped solid oxide fuel cell refers to a solid oxide fuel cell including one power generation element provided on a surface of one support. The support may serve also as a fuel electrode or an air electrode. For example, a solid oxide fuel cell may be mentioned that includes a fuel electrode also serving as a support and a solid electrolyte and an air electrode stacked in that order on the surface of the fuel electrode. The horizontal-striped solid oxide fuel cell refers to a solid oxide fuel cell including a plurality of power generation elements provided on a surface of one support.

In the present invention, the solid oxide fuel cell stack refers to an assembly of a plurality of power generation elements.

A solid oxide fuel cell system using a solid oxide fuel cell stack according to the present invention is not limited to a specific one, and publicly known manufacturing methods and other materials constituting the solid oxide fuel cell system may be used.

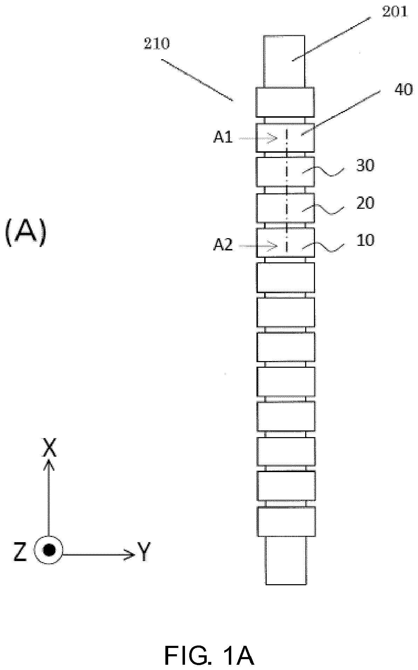

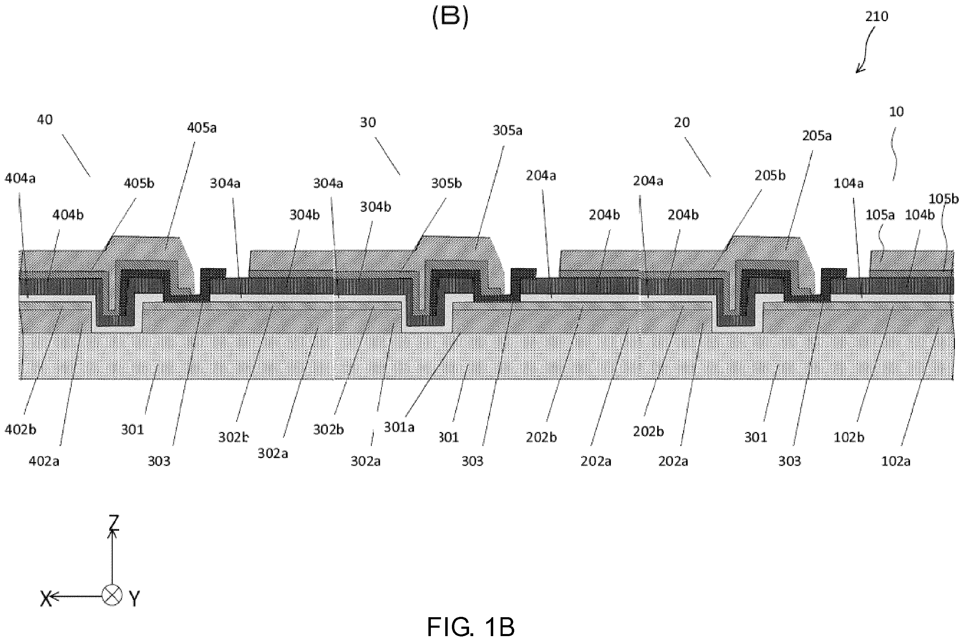

The whole construction and constituent elements of a solid oxide fuel cell stack will be described in reference to Fig. 1(A) and 1(B). Fig. 1(A) is a front view of a horizontal-striped solid oxide fuel cell stack as one embodiment of the present invention. Fig. 1(B) is a schematic view illustrating one embodiment of a solid oxide fuel cell stack 210 according to the present invention.


Power generation element

The construction of a solid oxide fuel cell stack is described in reference to Figs. 1 (A) and 1 (B) by taking a solid oxide fuel cell stack 210 as an example. The solid oxide fuel cell stack 210 will be described by taking a horizontal-striped type as an example.

As shown in Figs. 1(A) and 1(B), a solid oxide fuel cell stack 210 according to the present invention includes a plurality of power generation elements (10, 20, 30, 40). These power generation elements (10, 20, 30, 40) are connected in series. Each of the power generation elements (10, 20, 30, 40) is a laminate of a fuel electrode (102, 202, 302, 402), a solid electrolyte (104, 204, 304, 404), and an air electrode (105, 205, 305, 405) stacked in that order.

In the present specification, a vertical direction, a stacking direction, from the surface of a support 301 towards a fuel electrode (102, 202, 302, 402), a solid electrolyte (104, 204, 304, 404), and an air electrode (105, 205, 305, 405) in each power generation element (10, 20, 30, 40) is defined as a Z-axis direction. One direction perpendicular to the Z-axis direction is defined as an X-axis direction, and a direction perpendicular to both the Z-axis direction and the X-axis direction is defined as a Y-axis direction. Here the X-axis direction is a direction in which oxide ions move. As illustrated in Figs. 1(A) and 1(B), in the solid oxide fuel cell stack 210, the plurality of power generation elements (10, 20, 30, 40) are arranged along the X-axis direction.

Support

The solid oxide fuel cell stack 210 according to the present invention may include a support 201. When the solid oxide fuel cell stack is a vertical-striped solid oxide fuel cell stack, a support 201 may be present or absent. When the solid oxide fuel cell stack is a horizontal-striped solid oxide fuel cell stack, a support 201 is present. When the support 201 is present, power generation elements (10, 20, 30, 40) are formed that include: the support 201; and a fuel electrode (102, 202, 302, 402), a solid electrolyte (104, 204, 304, 404), and an air electrode (105, 205, 305, 405) stacked in that order on the support 201. When the solid oxide fuel cell stack is a horizontal-striped solid oxide fuel cell stack, a plurality of power generation elements (10, 20, 30, 40) are formed in series on the surface of the support 201.

In the present invention, any type of support may be used without particular limitation as long as the support 201 is porous, is permeable to gas, has a mechanical strength high enough to support the plurality of power generation elements (10, 20, 30, 40) and a electrical insulating property. At least one material selected from the group consisting of MgO, calcia-stabilized zirconia (CSZ), and forsterite may be used as materials for the support 201. The thickness of the support 201 is preferably 0.5 to 2 mm.

Inner electrode and outer electrode

In the present invention, fuel electrodes (102, 202, 302, 402) may be inner electrodes or alternatively may be outer electrodes. That is, each of a plurality of the power generation elements (10, 20, 30, 40) may be a laminate including at least a fuel electrode (102, 202, 302, 402) as an inner electrode, a solid electrolyte (104, 204, 304, 404), and an air electrode (105, 205, 305, 405) as an outer electrode stacked on a surface of each other. Alternatively, each of a plurality of the power generation elements (10, 20, 30, 40) may be a laminate including at least an air electrode (105, 205, 305, 405) as an inner electrode, a solid electrolyte (104, 204, 304, 404), and a fuel electrode (102, 202, 302, 402) as an outer electrode stacked on a surface of each other.

In a preferred embodiment of the present invention, the inner electrode is a fuel electrode (102, 202, 302, 402). The reason for this is as follows. Specifically, a porous structure having good gas permeability is adopted in the support 201 and current collecting layers, for example, fuel electrode layers 102a, 202a, 302a, 402a, the fuel electrode layers being described later in more detail. The support 201 holds the structure of the power generation elements (10, 20, 30, 40). Accordingly, the thickness of the support 201 is larger than that of the current collecting layer that is merely required to meet an electrical conductivity requirement. That is, the support 201 is likely to have a lower permeability to gas than the current collecting layer. Further, a comparison of the diffusion rate of oxygen gas with that of hydrogen gas has revealed that the diffusion rate of hydrogen gas is a few times higher than that of oxygen gas. Thus, when the inner electrode is an air electrode (105, 205, 305, 405), oxygen having a lower permeability than hydrogen is permeated into the support, and, consequently, the gas diffusion overvoltage is larger than that when the inner electrode is a fuel electrode (102, 202, 302, 402). As a result, power generation performance is likely to be lowered. Accordingly, when the inner electrode is the fuel electrode (102, 202, 302, 402), a better power generation performance can be obtained. When the inner electrode is the fuel electrode (102, 202, 302, 402), the outer electrode is the air electrode (105, 205, 305, 405).

Fuel electrode

In the present invention, the fuel electrode (102, 202, 302, 402) has porosity high enough to be permeable to fuel gas, catalytic activity (electrode activity) high enough to adsorb hydrogen, electrical conductivity, and oxide ion conductivity. The porosity of the fuel electrode (102, 202, 302, 402) may be smaller than that of the support 201.

For example, NiO/zirconium-containing oxides and NiO/cerium-containing oxides may be mentioned as materials for constituting the fuel electrode (102, 202, 302, 402), and at least any one of these materials is contained in the fuel electrode (102, 202, 302, 402). Here the NiO/zirconium-containing oxide refers to a homogeneous mixture of NiO and the zirconium-containing oxide at a predetermined ratio. The NiO/cerium-containing oxide refers to a homogeneous mixture of NiO and a cerium-containing oxide at a predetermined ratio. Zirconium-containing oxides of NiO/zirconium-containing oxides include, for example, zirconium-containing oxides doped with one or more of CaO, $Y_2O_3$, and $Sc_2O_3$. Cerium-containing oxides of NiO/cerium-containing oxides include compounds of general formula $Ce_{1-y}Ln_yO_2$ wherein Ln is a combination of one or more elements selected from La, Pr, Nd, Sm, Eu, Gd, Tb, Dy, Ho, Er, Tm, Yb, Lu, Sc, and Y; and $0.05 \leq y \leq 0.50$. NiO is reduced under a fuel atmosphere to Ni, and, thus, the oxides are converted to Ni/zirconium-containing oxides or Ni/cerium-containing oxides.

In the present invention, the fuel electrode (102, 202, 302, 402) may have a single-layer structure or a multi-layer structure. An example of the fuel electrode (102, 202, 302, 402) having a multi-layer structure as the inner electrode is a fuel electrode comprising a layer of Ni/YSZ, YSZ being yttria-stabilized zirconia, that is, a fuel electrode layer (102a, 202a, 302a, 402a) on the support side and a layer of Ni/GDC, GDC being $Gd_2O_3$-$CeO_2$, that is, a fuel electrode catalyst layer (102b, 202b, 302b, 402b) on the solid electrolyte side. The thickness of the fuel electrode (102, 202, 302, 402), that is, the total of the thickness of the fuel electrode layer and the thickness of the fuel electrode catalyst layer is preferably 10 to 200 $\mu$m. In this case, the thickness of the fuel electrode catalyst layer (102b, 202b, 302b, 402b) is preferably 0 to 30 $\mu$m.

Air electrode

In the present invention, the air electrode (105, 205, 305, 405) has porosity high enough to be permeable to oxygen, catalytic activity, i.e., electrode activity, high enough to adsorb oxygen or to ionize oxygen, electrical conductivity, and oxide ion conductivity. The porosity and electrical conductivity of the air electrode (105, 205, 305, 405) each may be lower than those of the current collecting layer.

Materials that constitute air electrodes (105, 205, 305, 405) include, for example, lanthanum cobalt-based oxides such as $La_{1-x}Sr_xCoO_3$ wherein x = 0.1 to 0.3, and $LaCo_{1-x}Ni_xO_3$ wherein x = 0.1 to 0.6, and lanthanum ferrite-based oxides that are solid solutions composed of $LaSrFeO_3$-based compounds and $LaSrCoO_3$-based compounds such as $La_{1-m}Sr_mCo_{1-n}Fe_nO_3$ wherein 0.05 < m < 0.50 and 0 < n < 1. The air electrode (105, 205, 305, 405) may have a single-layer structure or a multi-layered structure. An example of an outer electrode that is an air electrode (105, 205, 305, 405) having a multi-layered structure is $La_{0.6}Sr_{0.4}CO_{0.2}Fe_{0.8}O_3$, that is, an air electrode catalyst layer 105b, 205b, 305b, 405b on the solid electrolyte side, and $La_{0.6}Sr_{0.4}CO_{0.8}Fe_{0.2}O_3$, that is, an air electrode layer 105a, 205a, 305a, 405a, on the uppermost layer. The thickness of the air electrode, that is, the total thickness of the air electrode layer and the thickness of the air electrode catalyst layer, is preferably 0.2 to 30 $\mu$m.

Solid electrolyte

In the present invention, the solid electrolyte (104, 204, 304, 404) has oxide ion conductivity, gas sealing property, and electrical insulating property. Materials that constitute the solid electrolyte (104, 204, 304, 404) include lanthanum gallate-based oxides and stabilized zirconia with one or more elements selected from Y, Ca, and Sc dissolved in solid solution as solid solution species. In the present invention, suitable solid electrolytes (104, 204, 304, 404) include lanthanum gallate-based oxides (LSGMs) doped with Sr and Mg, more preferably lanthanum gallate-based oxides (LSGMs) represented by general formula $La_{1-a}Sr_aGa_{1-b-c}Mg_bCO_cO_{3-\delta}$ wherein $0.05 \leq a \leq 0.3$, 0 < b < 0.3, and $0 \leq c \leq 0.15$; and $\delta$ is a value that is determined so as to meet charge neutralization conditions. LSGM develops oxide ion conductivity, LSGM including $LaGaO_3$ as a base, La sites having been replaced with Sr. The solid electrolyte (104, 204, 304, 404) may have a single-layer structure or a multi-layered structure. When the solid electrolyte (104, 204, 304, 404) has a multi-layered structure, for example, a reaction inhibitory layer (104a, 204a, 304a, 404a) may be provided between the fuel electrode (102, 202, 302, 402) and the solid electrolyte layer (104b, 204b, 304b, 404b) formed of LSGM. Ceria with La dissolved in solid solution ($Ce_{1-x}La_xO_2$ wherein 0.3 < x < 0.5), preferably $Ce_{0.6}La_{0.4}O_2$, may be mentioned as a specific example of the reaction inhibitory layer (104a, 204a, 304a, 404a). The thickness of the solid electrolyte (104, 204, 304, 404), that is, the total thickness of the solid electrolyte layer and the reaction inhibitory layer is preferably 5 to 60 $\mu$m. The thickness of the reaction inhibitory layer (104a, 204a, 304a, 404a) is preferably 0 to 20 $\mu$m.

Current collecting layer

The solid oxide fuel cell stack according to the present invention includes a current collecting layer that electrically connects the outer electrode to the interconnector. The current collecting layer has gas (oxygen) permeability and electrical conductivity high enough to realize smooth flow of electrons produced by the air electrode. In the present invention, when the outer electrode is an air electrode, the current collecting layer can be formed by baking an electrically conductive paste containing a noble metal such as Ag or Pt or a paste containing an electrically conductive oxide such as $La_{0.6}Sr_{0.4}Co_{0.8}Fe_{0.2}O_{3-\delta}$. When the outer electrode is a fuel electrode, the current collecting layer can be formed by baking a paste containing NiO or oxides of metals such as Ni that, when reduced, develop electrical conductivity, or metals. Preferably, the current collecting layer has a porous or mesh structure from the viewpoint of providing gas permeability. The thickness of the current collecting layer is preferably 10 to 200 $\mu$m.

Interconnector

In the present invention, an interconnector 303 is formed of ceramic. That is, in the present invention, the interconnector 303 refers to a ceramic interconnector. The interconnector 303 contained in the solid oxide fuel cell stack 210 according to the present invention electrically connects an air electrode (205) in adjacent one power generation element, for example, a first power generation element 20, in a plurality of power generation elements (10, 20, 30, 40) to a fuel electrode (302) in the other power generation element, for example, a second power generation element 30. The interconnector 303 is formed of a perovskite oxide represented by formula (1):

$$Sr_aLa_bTi_{1-c-d}Nb_cFe_dO_{3-\delta} \qquad \text{formula (1)}$$

wherein a, b, c, and d are a positive real number that satisfies $0.1 \leq a \leq 0.8$, $0.1 \leq b \leq 0.8$, $0.05 \leq c \leq 0.2$, and $0.2 \leq d \leq 0.5$.

Here "formed of" means that the main component of the interconnector is a perovskite oxide represented by the formula (1). That is, an embodiment where the interconnector 303 contains other components, for example, diffusion elements described later is not excluded. In other words, preferably, the interconnector 303 contains as a main component a perovskite oxide represented by the formula (1). The main component means that, in the interconnector 303, the content of the perovskite oxide represented by the general formula (1) is not less than 80% by mole, preferably not less than 90% by mole, more preferably not less than 95% by mole. Still more preferably, the interconnector 303 consists of the perovskite oxide represented by the formula (1) only.

In the present invention, in the perovskite oxide represented by the formula (1), Ti site in SLT is replaced with Fe as an electrically conductive carrier. Since Fe does not react with Ni contained in the fuel electrode, even when Ni is dissolved as a solid solution in SLT replaced with Fe, the electrical conductivity is not lowered. On the other hand, SLT replaced with Fe is likely to cause oxygen deficiency due to the replacement of Ti site with Fe and thus leading to a tendency that oxide ion conductivity is disadvantageously developed. In the perovskite oxide represented by the formula (1) contained in the interconnector according to the present invention, however, since Ti site in SLT replaced with Fe is further replaced with pentavalent Nb having a higher valence than tetravalent Ti, the development of the oxide ion conductivity due to oxygen deficiency can be suppressed. That is, the electrical conductivity can be improved by replacing Ti site in SLT with Fe, and the development of the oxide ion conductivity can be suppressed by further replacing with Nb of Ti site in SLT already replaced with Fe. Thus, an interconnector 303 can be obtained that can simultaneously realize electrical conductivity and oxide ion insulating property.

Composition ratio between Sr and La is configured such that the requirements of $0.1 \leq a \leq 0.8$, $0.1 \leq b \leq 0.8$ and the oxygen content $(3-\delta)$ being not more than 3.00 are met. When this requirement is met, a film having low porosity and high denseness can be obtained. Further, a stable perovskite structure can be maintained, an impurity phase such as $La_2Ti_2O$, is not produced, and poor denseness due to sintering inhibition does not occur. More preferably, in the interconnector 303 according to the present invention, the composition ratio between Sr and La is configured such that the oxygen content is 2.95 to 3.00. When the oxygen content is not less than 2.95, a stable perovskite structure can be maintained, an impurity phase such as $TiO_2$ is not produced, and poor denseness due to sintering inhibition does not occur.

In the present invention, preferably, both the solid electrolyte (104, 204, 304, 404) and the interconnector 303 contain strontium. In the present invention, more preferably, the amount of strontium contained in the interconnector 303 is larger than that of strontium contained in the solid electrolyte (104, 204, 304, 404). That is, more preferably, the amount of strontium contained in the solid electrolyte (104, 204, 304, 404) is smaller than that of strontium contained in the interconnector 303. In the interconnector 303, preferably, the perovskite oxide represented by the formula (1) contains strontium in an amount of 30% by mole or more to 50% by mole or less in terms of element except oxygen in the composition. The solid electrolyte (104, 204, 304, 404) preferably contains not more than 15% by mole, more preferably 2.5% by mole or more to 15% by mole or less of strontium in the composition in terms of element excluding oxygen. That is, as described above, preferably, the solid electrolyte (104, 204, 304, 404) includes lanthanum gallate-based oxides (LSGMs) represented by general formula $La_{1-a}Sr_aGa_{1-b-c}Mg_bCo_cO_{3-\delta}$ wherein $0.05 \leq a \leq 0.3$, $0 < b < 0.3$, and $0 \leq c \leq 0.15$, and $\delta$ is a value that is determined so as to meet charge neutralizaiton conditions.

In the present invention, the composition ratio between Nb and Fe in the perovskite oxide represented by the formula (1) is $0.05 \leq c \leq 0.2$ and $0.2 \leq d \leq 0.5$, more preferably $0.1 \leq c \leq 0.2$ and $0.2 \leq d \leq 0.4$. The composition ratio of Ti is determined by 1-c-d.

In the present invention, in the perovskite oxide represented by the formula (1), the composition ratio of Fe is regulated in a specific range. When this requirement is met, good adhesion to the solid electrolyte (104, 204, 304, 404) and good electrical conductivity can be simultaneously realized while controlling the diffusion of elements into the solid electrolyte (104, 204, 304, 404) during firing. Further, when the composition ratio between Fe and Nb is in the specific range, better adhesion to the solid electrolyte (104, 204, 304, 404) and electrical conductivity can be realized.

In the present invention, the interconnector 303 may contain, as unavoidable components, elements that are, for example, in firing, diffused into the interconnector 303 from other members, that is, for example, the fuel electrode (102, 202, 302, 402), the air electrode (105, 205, 305, 405), and the solid electrolyte (104, 204, 304, 404). Such elements include, for example, Ni, Y, Gd, Ce, Zr, La, Sr, Ga, Mg, Co, and Fe. The amount of elements diffused may vary depending, for example, upon constituent materials for each member, crystal structure, firing temperature, and mode of firing, for example, successive firing or co-firing.

In a preferred embodiment of the present invention, the interconnector 303 has a compositional gradient within a composition range shown in formula (1) in the thickness-wise direction described later. When this requirement is met, electrical conductivity and oxide ion insulating property can be simultaneously realized.

In the interconnector 303, whether or not the perovskite oxide is present can be determined by analyzing the interconnector 303 with an X-ray diffraction analyzer (XRD).

The components and the ratio of the components of the perovskite oxide contained in the interconnector 303 can be specified by the following method. An interconnector 303 is cut out from the prepared solid oxide fuel cell stack and is fabricated into a thin film having a thickness of 100 nm to 200 nm with a focused ion beam-scanning electron microscope, hereinafer referred to as FIB-SEM. Element mapping is obtained by evaluating the thin film with scanning transmission electron microscope-energy dispersive X-ray spectrometry, hereinafter referred to as STEM-EDX. The components and the ratio of the components of the perovskite oxide contained in the interconnector 303 can be determined by quantitatively analyzing the elemental mapping by a thin film approximation method.

In a preferred embodiment of the present invention, the solid oxide fuel cell stack 210 includes an oxide ion insulating member 310 between the interconnector 303 and the solid electrolyte (204) in one power generation element, for example, first power generation element 20, and/or between the interconnector 303 and the solid electrolyte (304) in the other power generation element, for example, second power generation element 30. Furthermore, the oxide ion insulating member 310 is in contact with the interconnector 303 and the solid electrolyte 204 in the one power generation element 20 and/or the solid electrolyte 304 in the other power generation element 30. When this requirement is met, leakage of oxide ions can be suppressed, and, consequently, the output of power generation elements can be improved. Preferably, the oxide ion insulating member 310 contains a compound of formula (2): $Sr_xLa_yTiO_{3-6}$ wherein x and y each are a positive real number that satisfies $0.8 \leq x + y \leq 1.0$ and $0.01 < y \leq 0.1$. When this requirement is met, leakage of oxide ions can be suppressed.

In a preferred embodiment of the present invention, the interconnector 303 is formed by co-firing a first interconnector precursor formed on the surface of the fuel electrode (102, 202, 302, 402) and having a specific composition and a second interconnector precursor formed on the surface of the first interconnector precursor and having a specific composition different from that of the first interconnector precursor. Specifically, the firing causes mutual diffusion of elements contained in the first and second interconnector precursors to form the interconnector 303. The interconnector 303 thus obtained can have a compositional gradient within a composition range shown in formula (1) in the thickness-wise direction. The composition of the interconnector precursors and mutual element diffusion between them are described later.

First interconnector precursor

Preferably, the first interconnector precursor is formed of a perovskite oxide represented by formula (1'): $Sr_aLa_bTi_{1-c-d}Nb_cFe_dO_{3-\delta}$ wherein a, b, c, and d are a positive real number that satisfies $0.1 \leq a \leq 0.8$, $0.1 \leq b \leq 0.8$, $0.1 \leq c \leq 0.3$, and $0.3 \leq d \leq 0.6$. Here "formed of" means that the main component of the first interconnector precursor is a perovskite oxide represented by the formula (1'). That is, an embodiment where the first interconnector precursor contains other components, for example, diffusion elements described later is not excluded. In other words, preferably, the first interconnector precursor contains as a main component a perovskite oxide represented by the formula (1'). The main component means that, in the first interconnector precursor, the content of the perovskite oxide represented by the formula (1') is not less than 80% by mole, preferably not less than 90% by mole, more preferably not less than 95% by mole. Still more preferably, the first interconnector precursor consists of the perovskite oxide represented by the formula (1') only. The composition ratio between Sr and La is preferably such that the oxygen content $(3 - \delta)$ is not more than 3.00. When this requirement is met, a film having a low porosity and a high denseness can be obtained. Further, a stable perovskite structure can be maintained, an impurity phase such as $La_2Ti_2O_7$, is not produced, and poor denseness due to sintering inhibition does not occur.

In the present invention, the first interconnector precursor may contain, as unavoidable components, elements that are, for example, in the manufacturing process, diffused into the first interconnector precursor from other members such as the fuel electrode (102, 202, 302, 402), the air electrode (105, 205, 305, 405), second interconnector precursor, and the solid electrolyte (104, 204, 304, 404). Such elements include, for example, Ni, Y, Gd, Ce, Zr, La, Sr, Ga, Mg, Co, and Fe. The amount of elements diffused may vary depending, for example, upon constituent materials for each member, crystal structure, drying temperature, firing temperature, and mode of firing, for example, successive firing or co-firing. The mechanism of the element diffusion is described later.

In a preferred embodiment of the present invention, the first interconnector precursor has a composition represented by formula (1') wherein the composition ratio between Sr and La is such that the oxygen content is 2.95 to 3.00. When the amount of oxygen is not less than 2.95, a stable perovskite structure can be maintained, an impurity phase such as $TiO_2$ is not produced, and poor denseness due to sintering inhibition does not occur.

In a preferred embodiment of the present invention, in the first interconnector precursor, the composition ratio between Nb and Fe in the formula (1') is $0.1 \leq c \leq 0.3$ and $0.3 \leq d \leq 0.6$, more preferably $0.1 \leq c \leq 0.25$ and $0.3 \leq d \leq 0.5$. The composition ratio of Ti is determined by 1-c-d.

Second interconnector precursor

Preferably, the second interconnector precursor is formed of a perovskite oxide represented by formula (2): $Sr_xLa_yTiO_{3-\delta}$ wherein x and y each are a real positive number that satisfies $0.8 \leq x+y \leq 1.0$ and $0.01 < y \leq 0.1$. Here "formed of" means that the main component of the second interconnector precursor is a perovskite oxide represented by the formula (2). That is, an embodiment where the second interconnector precursor contains other components, for example, diffusion elements described later is not excluded. In other words, preferably, the second interconnector precursor contains as a main component a perovskite oxide represented by the formula (2). The main component means that, in the second interconnector precursor, the content of the perovskite oxide represented by the formula (2) is not less than 80% by mole, preferably not less than 90% by mole, more preferably not less than 95% by mole. Still more preferably, the second interconnector precursor consists of the perovskite oxide represented by the formula (2) only. When this requirement is met, satisfactory denseness and electrical conductivity can be simultaneously realized. In a more preferred embodiment of the present invention, the composition ratio between Sr and La satisfies a relationship of $0.8 \leq x+y \leq 0.9$, and $0.01 < y \leq 0.1$. When this requirement is met, the denseness can be further heightened. Further, Ti may be replaced with Nb. This can further enhance the electrical conductivity. Specific examples of such oxides preferably include $Sr_xLaTi_{1-z}Nb_zO_{3-\delta}$ wherein $0.8 \leq x + y \leq 1.0$, $0.01 < y \leq 0.1$, and $0.05 \leq z \leq 0.2$.

In the present invention, the second interconnector precursor may contain, as unavoidable components, elements that are, for example, in the manufacturing process, diffused into the second interconnector precursor from other members such as the fuel electrode (102, 202, 302, 402), the air electrode (105, 205, 305, 405), first interconnector precursor, and the solid electrolyte (104, 204, 304, 404). Such elements include, for example, Ni, Y, Gd, Ce, Zr, La, Sr, Ga, Mg, Co, Fe, and Nb. The amount of elements diffused may vary depending, for example, upon constituent materials for each member, crystal structure, drying temperature, firing temperature, and mode of firing, for example, successive firing or co-firing. The mechanism of the element diffusion is described later.

In a preferred embodiment of the present invention, the interconnector 303 and the solid electrolyte (104, 204, 304, 404) are formed by co-firing a first interconnector precursor formed on the surface of the fuel electrode (102, 202, 302, 402), a dried film of a solid electrolyte (104, 204, 304, 404) formed on the surface of the first interconnector precursor, and a second interconnector precursor formed on the surface of the first interconnector precursor and the dried film of the solid electrolyte (104, 204, 304, 404). The elements contained in the first interconnector precursor, the second interconnector precursor, and the dried film of the solid electrolyte (104, 204, 304, 404) are mutually diffused by co-firing. Here, before firing, preferably, the first interconnector precursor and the second interconnector precursor have a mutually contacted portion and a mutually noncontacted portion formed by forming a dried film of the solid electrolyte (104, 204, 304, 404) in a portion of an area between the first interconnector precursor and the second interconnector precursor. Specifically, in a portion of an area between the first interconnector precursor and the second interconnector precursor, a dried film of a solid electrolyte (204) in adjacent one power generation element, for example, a first power generation element 20, and/or a dried film of a solid electrolyte (304) in the other power generation element, for example, a second power generation element 30, are formed. By virtue of this, in co-firing, elements are diffused between both the interconnector precursors in a portion where both the interconnector precursors are in contact with each other, while elements are not diffused between both the interconnector precursors in a portion where both the interconnector precursors are not in contact with each other. In the portion where both the interconnector precursors are not in contact with each other, since each of the precursors is in contact with the dried film of the solid electrolyte (104, 204, 304, 404), element diffusion occurs between each of the precursors and the dried film of the solid electrolyte (104, 204, 304, 404).

In this embodiment, Sr is present in a large amount on the surface of the dried film of the solid electrolyte (104, 204, 304, 404), and, when the second interconnector precursor represented by the formula (2) which is highly reactive with the dried film of the solid electrolyte (104, 204, 304, 404) is formed, both the dried film of the solid electrolyte and the second interconnector precursor are reacted with each other during co-firing according to the mechanism of element diffusion described later to improve the adhesion between the solid electrolyte (104, 204, 304, 404) and the interconnector 303. As a result, gas sealing property between the solid electrolyte (104, 204, 304, 404) and the interconnector 303 can be improved.

The co-firing temperature is preferably 1,250°C (inclusive) to 1,400°C (exclusive). When this requirement is met, elements contained in each of the first interconnector precursor, the second interconnector precursor and the dried film of the solid electrolyte (104, 204, 304, 404) are mutually diffused.

EP 3 002 811 B1

Further, in this embodiment, preferably, also after firing, the portion in the second interconnector precursor that is not in contact with the first interconnector precursor is formed of the perovskite oxide represented by the formula (2). Here "formed of" means that the main component of the portion in the second interconnector precursor that is not in contact with the first interconnector precursor is the perovskite oxide represented by the formula (2). That is, an embodiment where the portion in the second interconnector precursor that is not in contact with the first interconnector precursor contains other components, for example, diffusion elements described later is not excluded. In other words, preferably, the portion in the second interconnector precursor that is not in contact with the first interconnector precursor contains as a main component the perovskite represented by the formula (2). The main component means that, in the portion of the second interconnector precursor that is not in contact with the first interconnector precursor, the content of the perovskite oxide represented by the formula (2) is not less than 80% by mole, preferably not less than 90% by mole, more preferably not less than 95% by mole. Still more preferably, the portion in the second interconnector precursor that is not in contact with the first interconnector precursor consists of the perovskite oxide represented by the formula (2) only. This can allow the portion in the second interconnector precursor that is not in contact with the first interconnector precursor to be formed as an oxide ion insulating member 310. As a result, leakage of oxide ions can be suppressed, and the output of power generation of the power generation element can be improved. The oxide ion insulating member 310 thus formed is provided between the interconnector 303 and the solid electrolyte 204 in adjacent one power generation element, for example, first power generation element 20, and/or between the interconnector 303 and the solid electrolyte 304 in the other power generation element, for example, second power generation element 30.

In the present invention, the mechanism of element dispersion by firing, specifically the mechanism of element diffusion between the first and second interconnector precursors and mutual diffusion of elements between each of the interconnector precursors and the solid electrolyte (104, 204, 304, 404), are considered as follows. The present invention, however, is not limited thereto.

Mechanism of mutual diffusion

Mechanism of mutual diffusion between the first interconnector precursor and the second interconnector precursor

Firing in such a state that the first interconnector precursor is in contact with the second interconnector precursor can allow elements contained in the first interconnector precursor and the second interconnector precursor to be heat-diffused from a high concentration region towards a low concentration region using a concentration gradient as a driving force. Specifically, Sr is diffused from the second interconnector precursor into the first interconnector precursor. La is diffused from the first interconnector precursor into the second interconnector precursor. Ti is diffused from the second interconnector precursor into the first interconnector precursor. As a result, a strongly adhered integral layer can be formed. That is, an interconnector 303 having excellent airtightness can be obtained. Further, an interconnector 303 can be obtained that has a compositional gradient within a composition range shown in formula (1) in the thickness-wise direction. Further, when Fe and Nb are diffused from the first interconnector precursor into the second interconnector precursor, a lowering in electrical conductivity of the interconnector 303 by dissolution of Ni as a solid solution can be suppressed, contributing to improved oxide ion insulating property.

Mechanism of mutual diffusion between the second interconnector precursor and the solid electrolyte

The second interconnector precursor develops electrical conductivity using $SrTiO_3$ as a base and through replacement thereof with La. Further, the solid electrolyte develops oxide ion conductivity using $LaGaO_3$ as a base and through replacement thereof with Sr. When firing is carried out in such a state that the second interconnector precursor and the solid electrolyte (104, 204, 304, 404) are in contact with each other, La contained in the second interconnector precursor is diffused into the solid electrolyte (104, 204, 304, 404), and near-stable $SrTiO_3$ crystals can be obtained. Further, Sr contained in the solid electrolyte (104, 204, 304, 404) is diffused into the second interconnector precursor, and near-stable $LaGaO_3$ crystals can be obtained. Since both $SrTiO_3$ and $LaGaO_3$ have oxide ion insulating properties, in the second interconnector and the solid electrolyte, the portion formed by firing in such a state that the second interconnector precursor is in contact with the solid electrolyte (104, 204, 304, 404) becomes insulative against oxide ions through element diffusion by firing.

Mechanism of mutual diffusion between the first interconnector precursor and the solid electrolyte

The first interconnector precursor develops electrical conductivity using $SrTiO_3$ as a base and through the replacement of Sr site with La and Ti site with Nb and Fe. Further, the solid electrolyte (104, 204, 304, 404) develops oxide ion conductivity using $LaGaO_3$ as a base and through the replacement of La site with Sr. When firing is carried out in such a state that the first interconnector precursor is in contact with the solid electrolyte (104, 204, 304, 404), La

10

contained in the first interconnector precursor is diffused into the solid electrolyte (104, 204, 304, 404) and near-stable $SrTiO_3$ crystals can be obtained. Further, Sr contained in the solid electrolyte (104, 204, 304, 404) is diffused into the first interconnector precursor and near-stable $LaGaO_3$ crystals can be obtained. Fe and Nb are heat-diffused from the first interconnector precursor into the solid electrolyte (104, 204, 304, 404) using a concentration gradient as a driving force. Since both $SrTiO_3$ and $LaGaO_3$ are insulative against oxide ions, in the first interconnector precursor and the solid electrolyte (104, 204, 304, 404), the portion formed by firing in such a state that the first interconnector precursor is in contact with the solid electrolyte (104, 204, 304, 404) becomes insulative against oxide ions through element diffusion by firing.

In the present invention, the lower limit of the electrical conductivity of the interconnector 303 is preferably 0.05 S/cm or more, more preferably 0.1 S/cm or more. The higher the electrical conductivity, the better the results. Thus, there is no upper limit of the electrical conductivity. Preferably, however, the electrical conductivity is not more than 0.16 S/cm. When the electrical conductivity of the interconnector is in such a range, the electrical conductivity of the interconnector 303 can be improved, and the power generation performance of the solid oxide fuel cell stack 210 can be improved.

In the present invention, the upper limit of the porosity of the interconnector 303 is preferably 1% or less, more preferably 0.1% or less. The lower limit is preferably 0% or more. When the porosity of the interconnector is in such a range, gas sealing property of the interconnector 303 can be ensured, leading to improved power generation efficiency of the solid oxide fuel cell stack 210. The thickness of the interconnector 303 is preferably 5 to 50 $\mu$m.

In the present invention, the porosity can be measured by the following method.

Method of obtaining porosity from SEM image

An SEM image is obtained by cutting out a specimen so as to include an interconnector from the solid oxide fuel cell stack and observing the interconnector with a scanning electron microscope (for example, S-4100 manufactured by Hitachi, Ltd.) under conditions of an accelerated voltage of 15 kV, a secondary electron image, and a magnification of 100 to 10000 times. The SEM image is evaluated by a software for image processing (for example, Winroofver 6.5.1 manufactured by MITANI CORPORATION). As a result, a histogram including a brightness as abscissa and an appearance frequency as ordinate is obtained. In this histogram, an area where the brightness is lower than the average of the minimum and the maximum of the brightness is regarded as a low-brightness area while an area where the brightness is higher than the average is regarded as a high-brightness area. The low-brightness area is determined as pores and the high-brightness area other than the pores is determined as the interconnector for binarization processing. Thereafter, the porosity is obtained by the following equation.

$$\text{Porosity (\%)} = \text{Value of integral in low-brightness area} \div \text{Value of integral of appearance frequency of whole} \times 100$$

In the present invention, in order to confirm that the interconnector 303 has a desired porosity obtained by the above method, the porosity determined by the following method can be used as one index.

Method of measuring porosity by Archimedes method

Specimens are obtained by subjecting a raw material powder for the interconnector to uniaxial pressing under a load of 900 kgf/$cm^2$ and firing the pressed product at 1300°C for 2 hours under an atmospheric environment. For the specimens, the porosity is measured by an Archimedes method according to JIS R 1634.

In the present invention, the electrical conductivity can be measured by the following method.

Method of obtaining electrical conductivity by measuring voltage between terminals

A solid oxide fuel cell stack is prepared. A current collector on the fuel electrode side is formed by cladding a current collecting metal to an exposed area of the fuel electrode in adjacent one power generation element with a silver paste and conducting baking. A current collector on the air electrode side including the interconnector 303 is formed by cladding a current collecting metal to an exposed area of a fuel electrode in adjacent the other power generation element with a silver paste and conducting baking. A current collector on the interconnector-free air electrode side is formed by cladding a current collecting metal to an air electrode of adjacent one power generation element with a silver paste and conducting baking. Thereafter, the voltage between terminals is measured under the following power generation conditions by connecting a potential wire and a current wire to the fuel electrode in the adjacent one power generation element and to the fuel electrode in the adjacent other power generation element and connecting a potential wire to the air electrode.

Fuel gas: mixed gas composed of ($H_2$ + 3%$H_2O$) and $N_2$ (mixing ratio $H_2$ : $N_2$ = 7 : 4 (vol : vol))
Fuel utilization: 7%
Oxidizing gas: air
Operating temp.: 700°C
Current density: 0.4 A/$cm^2$

The voltage between terminals (V) connected to the fuel electrode in the one power generation element and the fuel electrode in the other power generation element and the voltage between terminals (V') connected to the fuel electrode in the one power generation element and the air electrode in the one power generation element are measured. The electrical conductivity of the interconnector is calculated using the measured voltages between terminals by the following formula.

$$\text{Electrical conductivity = current density x area of air electrode} \div (V' - V) \times (\text{thickness of interconnector}) \div (\text{area of interconnector})$$

The area of the interconnector and the air electrode is determined, for example, with a vernier caliper after peeling-off of the interconnector and the air electrode from the solid oxide fuel cell stack after the power generation test.
In the present invention, in order to confirm that the interconnector has a desired electrical conductivity obtained by measuring the voltage between terminals, the electrical conductivity determined by the following method can be used as one index.

Method of measuring electrical conductivity by four-terminal method

A specimen for the measurement of electrical conductivity is prepared by subjecting a raw material powder for the interconnector to uniaxial pressing under a load of 900 kgf/$cm^2$ and firing the pressed product at 1300°C for 2 hours under an atmospheric environment. The electrical conductivity of the specimen is measured by a direct current four-terminal method based on JIS (Japanese Industrial Standards) R 1650-2 under an atmospheric environment at 700°C.

Structure of solid oxide fuel cell stack

With reference to Fig. 1(A) and Fig. 1(B), the structure of the solid oxide fuel cell stack is further described. As illustrated in Fig. 1(A), a horizontal-striped solid oxide fuel cell stack 210 includes 13 power generation elements connected in series on a support 201. Power generation elements 10, 20, 30, and 40 are four power generation elements continuously adjacent to each other.
Fig. 1(B) illustrates four adjacent power generation elements 10, 20, 30, 40 in a horizontal-striped solid oxide fuel cell stack 210. The solid oxide fuel cell stack 210 in Fig. 1(B) is of a type in which the inner electrode is a fuel electrode 102, 202, 302, 402. The solid oxide fuel cell stack 210 includes a support 301, first/second fuel electrode, that is, fuel electrode layers 102a, 202a, 302a, 402a, and fuel electrode catalyst layers 102b, 202b, 302b, 402b, first/second solid electrolytes, that is, reaction inhibitory layers 104a, 204a, 304a, 404a, and solid electrolyte layers 104b, 204b, 304b, 404b, air electrodes 105b, 205b, 305b, 405b, current collecting layers 105a, 205a, 305a, 405a, and an interconnector 303. Here, first/second means that the structure is a single-layer or two-layer structure and, in two layers, has a first layer and a second layer.

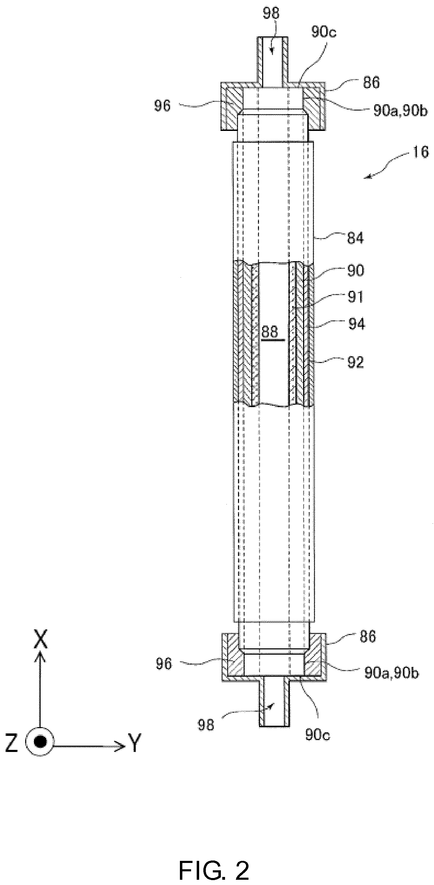

Fig. 2 is a partial cross-sectional view of a vertical-striped solid oxide fuel cell unit constituting a vertical-striped solid oxide fuel cell stack that is one embodiment of the present invention. The vertical-striped solid oxide fuel cell unit 16 includes a fuel cell 84 and an inner electrode terminal 86 connected to an upper directional end and a lower directional end of the fuel cell 84. The fuel cell 84 is a vertically extended tubular structure and includes: a cylindrical porous support 91 with a fuel gas flow path 88 provided in its interior; and, an inner electrode layer 90 provided on a surface of the porous support 91, an outer electrode layer 92, and a solid electrolyte 94 provided between the inner electrode layer 90 and the outer electrode layer 92. In the vertical-striped solid oxide fuel cell stack, the interconnector and the air electrode are connected to each other through a metal such as Ag or an electrically conductive ceramic.
Since the inner electrode terminal 86 mounted on the upper end side in the fuel cell 84 and the inner electrode terminal 86 mounted on the lower end side in the fuel cell 84 have an identical structure, a detailed explanation will be made on the inner electrode terminal 86 mounted on the upper end side. An upper part 90a of the inner electrode layer 90 includes an outer peripheral face 90b and an upper end face 90c exposed to the solid electrolyte 94 and the outer electrode layer 92. The inner electrode terminal 86 is connected to the outer peripheral face 90b of the inner electrode layer 90 through an electrically conductive sealing material 96 and is in directly contact with the upper end face 90c of the inner electrode layer 90, thereby being electrically connected to the inner electrode layer 90. A fuel gas flow path 98 in communication with the fuel gas flow path 88 in the inner electrode layer 90 is provided at the central portion of the inner electrode terminal 86.

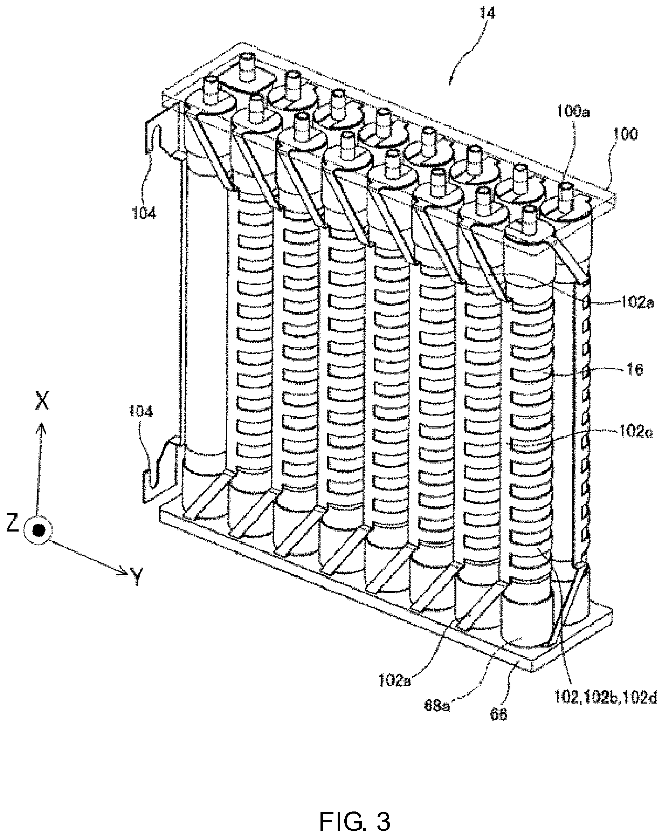

Fig. 3 is a perspective view of a vertical-striped solid oxide fuel cell stack as one embodiment of the present invention. The vertical-striped solid oxide fuel cell stack 14 includes 16 vertical-striped solid oxide fuel cell units 16. The lower end side and the upper end side of the vertical-striped solid oxide fuel cell unit 16 are supported by ceramic lower support plate 68 and upper support plate 100, respectively. Through-holes 68a and 100a through which the inner electrode terminal 86 can be penetrated are provided in these lower support plate 68 and upper support plate 100, respectively.

A current collector 102 and an external terminal 104 are mounted in the vertical-striped solid oxide fuel cell unit 16. The current collector 102 is integrally formed by a fuel electrode connector 102a electrically connected to the inner electrode terminal 86 mounted on the inner electrode layer 90 as the fuel electrode, and an air electrode connector 102b electrically connected to the whole outer peripheral face of the outer electrode layer 92 as the air electrode. The air electrode connector 102b includes a vertical portion 102c vertically extended on the surface of the outer electrode layer 92, and a number of horizontal portion 102b horizontally extended from the vertical portion 102c along the surface of the outer electrode layer 92. Further, the fuel electrode connector 102a is linearly extended from the vertical portion 102c of the air electrode connector 102b in an obliquely upper or lower direction towards the inner electrode terminal 86 located in the upper and lower directions of the fuel cell unit 16.

An external terminal 104 is connected to the inner electrode terminal 86 on the upper end of a vertical-striped solid oxide fuel cell unit 16. An external terminal 104 is connected to the inner electrode terminal 86 on the lower end of a vertical-striped solid oxide fuel cell unit 16. The two vertical-striped solid oxide fuel cell units 16 are located at the ends (back side and front side at the left end in Fig. 3) of the vertical-striped solid oxide fuel cell stack 14. These external terminals 104 are connected to external terminals 104 (not shown) in the vertical-striped solid oxide fuel cell units 16 located at the ends of the adjacent vertical-striped solid oxide fuel cell stack 14, and, as described above, all of 16 vertical-striped solid oxide fuel cell units 16 are connected in series.

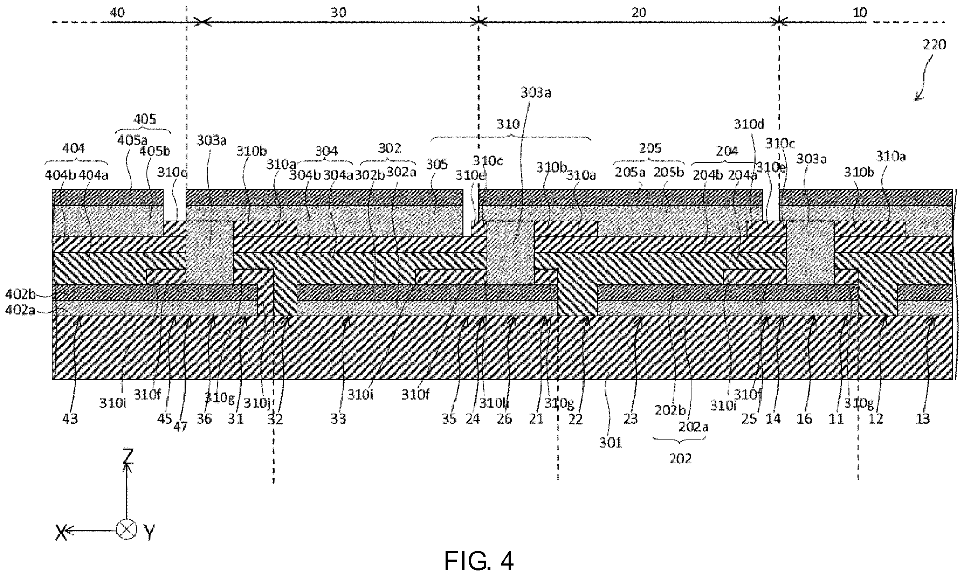

Fig. 4 is a schematic view of illustrating one preferred embodiment of the solid oxide fuel cell stack 220 according to the present invention. In the solid oxide fuel cell stack 220, four adjacent power generation elements (10, 20, 30, 40) are illustrated. The solid oxide fuel cell stack 220 includes a support 301 and four power generation elements (10, 20, 30, 40) provided on a surface of the support 301. When the two adjacent power generation elements in the four power generation elements are a first power generation element 20 and a second power generation element 30, the first power generation element 20 includes, as constituent members, a first fuel electrode 202, a first air electrode 205, and a first solid electrolyte 204 provided between the first fuel electrode 202 and the first air electrode 205. The first fuel electrode 202 is arranged between the support 301 and the first air electrode 205. The second power generation element 30 includes, as constituent members, a second fuel electrode 302, a second air electrode 305, and a second solid electrolyte 304 provided between the second fuel electrode 302 and the second air electrode 305. The second fuel electrode 302 is arranged between the support 301 and the second air electrode 305.

The solid oxide fuel cell stack 220 further includes an interconnector 303 that electrically connects the first air electrode 205 in the first power generation element 20 to the second fuel electrode 302 in the second power generation element 30. The first power generation element 20 and the second power generation element 30 are connected in series through the interconnector 303.

In the solid oxide fuel cell stack 220, from the surface of the support 301, the first fuel electrode 202, the first solid electrolyte 204, and the first air electrode 205, or the second fuel electrode 302, the second solid electrolyte 304, and the second air electrode 305 are arranged in Z-axis direction.

Each area in power generation element

The first power generation element 20 includes, for example, a first area 21, a second area 22, a third area 23, and a sixth area 26. In this example, the first power generation element 20 further includes a fourth area 24 and a fifth area 25. In the solid oxide fuel cell stack 220, when a direction that is vertical to Z-axis direction and in which oxide ions migrate is presumed to be an X-axis direction, in the first power generation element 20, the third area 23, the second area 22, the first area 21, and the sixth area 26 are continuously provided in that order and adjacent to each other in X-axis direction. Further, when the first power generation element 20 further includes a fourth area 24 and a fifth area 25, the fifth area 25, the third area 23, the second area 22, the first area 21, the sixth area 26, and the fourth area 24 are provided in that order and adjacent to each other in X-axis direction.

For example, in the first area 21 in the first power generation element 20, the second fuel electrode 302, the first solid electrolyte 204, and the first air electrode 205 are arranged in that order in Z-axis direction. In the second area 22 in the first power generation element 20, the first solid electrolyte 204 and the first air electrode 205 are arranged in that order in Z-axis direction. In the third area 23 in the first power generation element 20, the first fuel electrode 202, the first solid electrolyte 204, and the first air electrode 205 are arranged in that order in Z-axis direction. In the fourth area 24 in the first power generation element 20, the second fuel electrode 302, the second solid electrolyte 304, and the first air electrode 205 are arranged in that order in Z-axis direction. In the fifth area 25 in the first power generation element 20, the first fuel electrode 202 and the first solid electrolyte 204 are arranged in that order in Z-axis direction. In the sixth area 26 in the first power generation element 20, the second fuel electrode 302, the interconnector 303a, and the first air electrode 205 are arranged in that order in Z-axis direction. The first area 21, the fourth area 24, and the sixth area 26 are formed of a constituent member for the first power generation element 20 and a constituent member for the second power generation element 30. The second area 22, the third area 23, and the fifth area 25 consists of only a constituent member for the first power generation element 20. The third area 23 includes all constituent members for the first power generation element 20. That is, in the third area 23, the first fuel electrode 202, the first solid electrolyte 204, and the first air electrode 205 are arranged in that order in Z-axis direction, and the third area 23 functions as a power generation unit in the first power generation element 20. In the sixth area 26, the first power generation element 20 (first air electrode 205) and the second power generation element 30 (second fuel electrode 302) are connected in series through the interconnector 303. The thickness of the interconnector 303 refers to a length of the interconnector 303 along Z-axis in the sixth area 16, 26, 36. That is, the length between the fuel electrode, for example, second fuel electrode 302, and the air electrode, first air electrode 205, corresponds to the thickness of the interconnector 303.

As shown in Fig. 4, in this example, the second power generation element 30 also includes the first area 31 to the sixth area 36.

Insulating portion and each portion thereof

The solid oxide fuel cell stack 220 may further include an insulating member 310. In the solid oxide fuel cell stack 220, the insulating member 310 is in contact with the interconnector 303. The insulating member 310 includes a first portion 310a and a second portion 310b. In this example, the insulating member 310 further includes a third portion 310c, a fourth portion 310d, and a fifth portion 310e. The insulating member 310 may further include a sixth portion 310f, a seventh portion 310g, an eighth portion 310h, a ninth portion 310i, and a tenth portion 310j.

In the second area 22, the first portion 310a is provided between the first solid electrolyte 204 and the first air electrode 205. In the first area 21, the second portion 310b is provided between the first solid electrolyte 204 and the first air electrode 205. As illustrated in Fig. 4, the second portion 310b is provided in contact with the interconnector 303. When the insulating member 310 includes the first portion 310a and the second portion 310b, leakage of oxide ions caused by contact between the first air electrode 205 and the first solid electrolyte 204 can be prevented. Therefore, the formation of a counter cell can be suppressed.

In the solid oxide fuel cell stack 220, the whole area of the surface of the interconnector 303 is preferably covered with the first air electrode 205. This can enlarge the area of contact between the interconnector 303 and the first air electrode 205. As a result, the electrically conductive area of the interconnector 303 can be increased, contributing to enhanced electrical conductivity. Thus, the output of power generation of the power generation element can be improved.

The insulating member 310 is described in more detail. The third portion 310c in the insulating member 310 is provided between the second solid electrolyte 304 and the first air electrode 205 in the fourth area 24. The whole area of the surface of the first portion 310a, the second portion 310b, and the third portion 310c in the insulating member 310 is covered with the first air electrode 205. The third portion 310c is provided in contact with the interconnector 303a. Leakage of oxide ions can be prevented by adopting such a construction that the air electrode 205 in one power generation element 20 is not in contact with the solid electrolyte 304 in the other power generation element 30. As a result, the formation of a counter cell can be suppressed. Further, the distance between the adjacent power generation elements can be reduced, and the resistance between the power generation elements can be reduced.

In a part or the whole in X-axis direction of the fifth area 35 in the second power generation element 30, the fifth portion 310e in the insulating member 310 is provided on the second solid electrolyte 304 and is provided adjacent to the third portion 310c in X-axis direction. By virtue of this construction, the contact between the first air electrode 205 and the second solid electrolyte 304 can be more reliably prevented, and leakage of oxide ions can be more reliably prevented, contributing to the suppression of the formation of a counter cell. Further, the gas sealing property of the interconnector 303 can be further enhanced.

As illustrated in Fig. 4, in a part in X-axis direction of the third area 23 in the first power generation element 20, the fourth portion 310d in the insulating member 310 is provided between the first solid electrolyte 204 and the first air electrode 205. The fourth portion 310d is provided adjacent to the fifth portion 310e in X-axis direction.This allows the gas sealing property of the interconnector 303a to be improved. On the other hand, the third area (13, 23, 33, 43) in the power generation element (10, 20, 30, 40) is an area that contributes to power generation. Therefore, an embodiment where the fourth portion 310d is not provided can be adopted from the viewpoint of power generation efficiency.

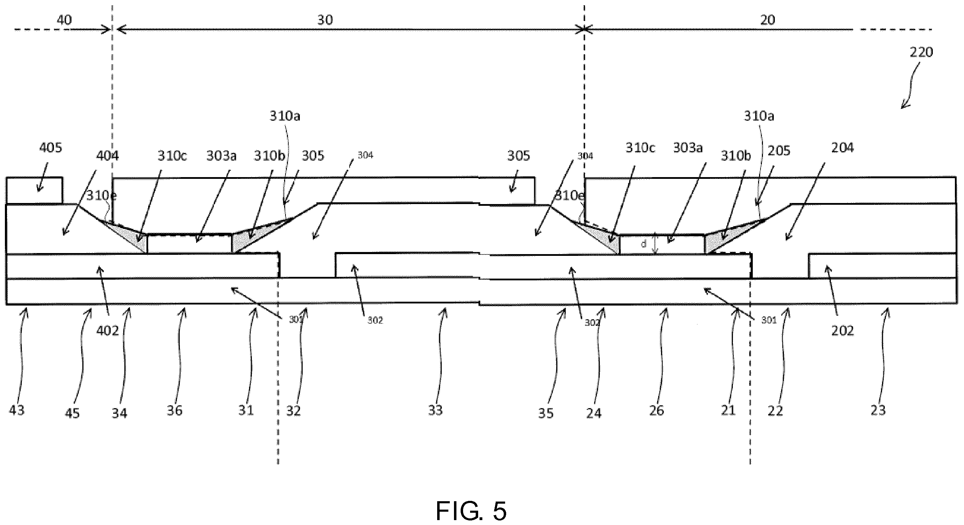

Fig. 5 is a view of illustrating one preferred embodiment of the solid oxide fuel cell stack 220 according to the present invention. An oxide ion insulating portion (310a, 310b) is provided between a solid electrolyte 204 in one power generation elements and an interconnector 303, and the oxide ion insulating portion (310a, 310b) is in contact with the interconnector 303 and the solid electrolyte 204 in the one power generation elements. Further, an oxide ion insulating portion 310c is provided between a solid electrolyte 304 in the other power generation element and a interconnector 303, and the oxide ion insulating portion 310c is in contact with the interconnector 303 and tfhe solid electrolyte 304 in the other power generation element. This can realize the suppression of leakage of oxide ions, and, as a result, the output of power generation in the power generation element can be improved. In Fig. 5, an embodiment is illustrated where two oxide ion insulating portions are provided. However, it should be noted that an embodiment where any one of the oxide ion insulating portions is provided is also encompassed in the scope of the present invention.

The solid oxide fuel cell stack 220 illustrated in Fig. 5 is described in more detail. The solid oxide fuel cell stack 220 includes three adjacent power generation elements 20, 30 and 40. An oxide ion insulating portion (310a, 310b) is provided between the solid electrolyte 204 in the first power generation element 20 and the interconnector 303, and the oxide ion insulating portion (310a, 310b) is in contact with the interconnector 303 and the solid electrolyte 204 in the first power generation element 20. Further, an oxide ion insulating portion 310c is provided between the solid electrolyte 304 in the second power generation element 30 and the interconnector 303, and the oxide ion insulating portion 310c is in contact with the interconnector 303 and the solid electrolyte 304 in the second power generation element 30. Likewise, an oxide ion insulating portion (310a, 310b) is provided between the solid electrolyte 304 in the second power generation element 30 and the interconnector 303, and the oxide ion insulating portion (310a, 310b) is in contact with the interconnector 303 and the solid electrolyte 304 in the second power generation element 20. Further, an oxide ion insulating portion 310c is provided between the solid electrolyte 404 in the third power generation element 40 and the interconnector 303, and the oxide ion insulating portion 310c is in contact with the interconnector 303 and the solid electrolyte 404 in the third power generation element 40. By virtue of these constructions, leakage of oxide ions can be suppressed, and, as a result, the output of power generation in the power generation element can be improved. Fig. 5 illustrates an embodiment where two oxide ion insulating portions (310a and 310b, and 310c) are provided between two adjacent power generation elements, for example, first power generation element 20 and second power generation element 30, and second power generation element 30 and third power generation element 40. However, it should be noted that an embodiment where any one of the power generation elements is provided is also encompassed in the scope of the present invention.

In the present invention, preferably, the whole area of the surface of the interconnector 303 is covered with the air electrode 205 in the one power generation element. By virtue of this, the area of contact between the interconnector 303 and the air electrode 205 can be enlarged. As a result, since the electrically conductive area in the interconnector 303 can be enlarged, the electrical conductivity can be enhanced. Thus, the output of power generation in the power generation element can be improved. In the present invention, since the whole area of the surface of the interconnector 303 is covered with the air electrode 205, preferably, a construction is adopted in which, as described below, the air electrode 205 in one power generation element 20 is not in contact with the solid electrolyte 304 in the other power generation element 30.

That is, in a preferred embodiment of the present invention, an insulating portion 310c is further provided between the air electrode 205 in the one power generation element 20 and the solid electrolyte 304 in the other power generation element 30. Specifically, as illustrated in Figs. 4 and 5, in the solid oxide fuel cell stack 220, two adjacent power generation elements (20, 30) further include a fourth area 24 in which a second fuel electrode 302, a second solid electrolyte 304, and a first air electrode 205 are arranged in that order in Z-axis direction, and, in the fourth area 24, the insulating member 310 further includes a third portion 310c provided between the second solid electrolyte 304 and the first air electrode 205. The fourth area 24 is continuously adjacent to a sixth area 26 in X-axis direction. That is, the whole area of the surface of the first portion 310a, the second portion 310b, and the third portion 310c in the insulating member 310 is covered with the first air electrode 205. By virtue of this construction, the air electrode 205 in the first power generation element 20 can also be not in contact with the solid electrolyte 304 in the second power generation element 30, and, thus, leakage of oxide ions that occurs when the air electrode 205 is in contact with the solid electrolyte 304 can also be prevented. As a result, the formation of a counter cell can be suppressed. Further, the distance between adjacent power generation elements can be reduced, and the resistance between the power generation elements can be reduced. In a preferred embodiment of the present invention, in the solid oxide fuel cell stack 220, an insulating portion (310a, 310b) is provided between the solid electrolyte 204 in the first power generation element 20 and the air electrode 205 in the first power generation element 20, and an insulating portion 310c is provided between the air electrode 205 in the first power generation element 20 and the solid electrolyte 304 in the second power generation element 30, and both the insulating portion (310a, 310b) and the insulating portion 310c are in contact with the interconnector 303a. By virtue of the construction where such two insulating portions are provided, a solid oxide fuel cell stack that possesses more excellent power generation performance can be obtained.

With reference to Fig. 4 again, the insulating portion 310 is further described. In a preferred embodiment of the present invention, the insulating member 310 in the solid oxide fuel cell stack 220 further includes an eighth portion 310h, in the fourth area 24 in the first power generation element 20, that is provided between the second fuel electrode 302 and the second solid electrolyte 304. By virtue of this, an unfavorable phenomenon that a counter cell is formed through the occurrence of power generation in the fourth area 24 where the second fuel electrode 302, the second solid electrolyte 304, and the first air electrode 205 are arranged in that order in Z-axis direction in the first power generation element can be suppressed. Further,the eighth portion 310h in the insulating portion is joined to the interconnector 303a and the solid electrolyte 304, and, thus, the gas sealing property of the interconnector 303 can be enhanced.

In a preferred embodiment of the present invention, the insulating portion 310 in the solid oxide fuel cell stack 220 further includes a sixth portion 310f, in the fifth area 35 in the second power generation element 30, that is provided between the second fuel electrode 302 and the second solid electrolyte 304. In this example, an interconnector 303a, an eighth portion 310h, and a sixth portion 310f are arranged in that order and are adjacent to each other in X-axis direction. The provision of the sixth portion 310f in the insulating portion can further enhance the gas sealing property of the interconnector 303.

In a preferred embodiment of the present invention, the insulating member 310 in the solid oxide fuel cell stack 220 further includes a ninth portion 310i, in a part of the third area 33 in the second power generation element 30, that is provided between the second fuel electrode 302 and the second solid electrolyte 304. In this example, a sixth portion 310f and a ninth portion 310i are arranged in that order and are adjacent to each other in X-axis direction. The provision of the ninth portion 310i in the insulating portion can further enhance the gas sealing property of the interconnector 303a. On the other hand, the third area (13, 23, 33, 43) in the power generation element (10, 20, 30, 40) is an area that contributes to power generation. Therefore, an embodiment where the ninth portion 310i is not provided can be adopted from the viewpoint of power generation efficiency.

In a preferred embodiment of the present invention, the insulating member 310 in the solid oxide fuel cell stack 220 further includes a seventh portion 310g, in the first area 21 in the first power generation element 20, that is provided between the second fuel electrode 302 and the first solid electrolyte 204. For example, the seventh portion 310g is disposed in contact with the interconnector 303a. By virtue of this, an unfavorable phenomenon that a counter cell is formed due to the occurrence of power generation in the first area 21 where the second fuel electrode 302, the first solid electrolyte 204, and the first air electrode 205 are arranged in that order in Z-axis direction in the first power generation element 20 can be suppressed. Further, since the seventh portion 310g is joined to the interconnector 303a, the gas sealing property of the interconnector 303a can be improved.

In a preferred embodiment of the present invention, the insulating member 310 in the solid oxide fuel cell stack 220 further includes a tenth portion 310j, in the second area 32 in the second power generation element, that is provided between the support 301 and the second solid electrolyte 304 in Z-axis direction and between the second solid electrolyte 304, and the third fuel electrode 402 and the seventh portion 310g in the insulating portion in X-axis direction. This can enhance the gas sealing property of the interconnector 303a.

In another embodiment of the present invention, materials for the interconnector 303 that are insulative against oxide ions may be used instead of each of the above insulating portions.


Method for manufacturing solid oxide fuel cell stack

The solid oxide fuel cell stack according to the present invention may be manufactured by any method without particular limitation to particular method. For example, the solid oxide fuel cell stack according to the present invention can be manufactured as follows. The manufacturing method is described by taking, as an example, a fuel electrode as an inner electrode and an air electrode as an outer electrode.

For example, the support can be prepared as follows. At the outset, a solvent, for example, water or alcohol, is added to a raw material powder to prepare a green body. In this case, dispersants, binders, defoamers, or pore forming agents or a combination thereof may be added as optional ingredient. For example, sheet molding, press molding, and extrusion molding are used for molding of the green body. When a support with a gas passage formed in the interior thereof is molded, extrusion molding is preferably used. When a support having a multi-layered structure is molded, in addition to multi-layer extrusion molding in which a plurality of layers are extruded at a time, a method in which the upper layer is formed by coating or printing may also be used. Specific examples of coating methods include slurry coating methods in which a raw material slurry is coated, tape casting methods, doctor blade methods, and transfer methods. Specific examples of printing methods include screen printing methods and ink jet printing methods. Next, the prepared green body is molded, and the molded product is dried to obtain a support precursor. Thereafter, a preferred method may be adopted in which the support precursor is then calcined (800°C (inclusive) to 1100°C (exclusive)) to obtain a porous calcination product for the support and the calcination product for the support is solely fired to obtain a support. Alternatively, the calcination product for the support, together with at least a fuel electrode and others, may be fired to obtain a support. The firing is preferably carried out at 1100°C (inclusive) to 1400°C (exclusive).

For example, the interconnector 303 can be prepared as follows. At the outset, a raw material powder is prepared. The raw material powder can be prepared, for example, by a solid phase method. That is, powders of metal oxides as the raw material are weighed so as to provide a desired composition ratio. The powders are mixed in a solution, and the solvent is removed to obtain a powder. The powder is fired, for example, at 115°C, followed by grinding to prepare a raw material powder. A solvent, for example, water or alcohol, and, if necessary, molding assistants such as dispersants and binders are added to the raw material powder to prepare a slurry or a paste. An interconnector can be obtained by coating the slurry or the paste, drying the slurry or the paste (80°C or more to 1100°C or less, preferably 300°C or more to 1100°C or less) to form a dried film and firing the film (1100°C (inclusive) to 1400°C (exclusive), preferably 1250°C (inclusive) to 1400°C (exclusive)). The coating may be carried out by the same method as described above. Alternatively, a method may be adopted in which each dried film is previously formed as a transfer sheet and the transfer film is applied to a lamination body.

For example, the fuel electrode (202, 302, 402), the solid electrolyte (204, 304, 404), and the air electrode (205, 305, 405) can be prepared as follows. A solvent, for example, water or alcohol, and, if necessary, molding assistants such as dispersants and binders are added to the raw material powder to prepare a slurry or a paste. The fuel electrode (202, 302, 402), the solid electrolyte (204, 304, 404), and the air electrode (205, 305, 405) can be obtained by coating the slurry or the paste, drying the slurry or the paste (80°C or more to 1100°C or less, preferably 300°C or more to 1100°C or less) to form a dried film and firing the film (1100°C (inclusive) to 1400°C (exclusive), preferably 1250°C (inclusive) to 1400°C (exclusive)). The coating may be carried out by the same method as described above. Alternatively, a method may be adopted in which each dried film is previously formed as a transfer sheet and the transfer film is applied to a lamination body.

In a preferred embodiment of the manufacturing method according to the present invention, firing is preferably carried out for each layer formation. That is, in this embodiment, the manufacturing method includes at least the steps of: forming a dried film for a fuel electrode (202, 302, 402) on a surface of a support 301 or a calcination product for the supportand then firing the dried film to form a fuel electrode (202, 302, 402); forming a dried film for an interconnector 303 and then firing the dried film to form an interconnector 303; forming a dried film for a solid electrolyte (204, 304, 404) and firing the dried film to form a solid electrolyte (204, 304, 404); and forming a dried film for an air electrode (205, 305, 405) and then firing the dried film to form an air electrode (205, 305, 405). A current collecting layer is formed after the formation of the air electrode 307.

In a preferred embodiment of the manufacturing method according to the present invention, the interconnector 303 is formed by forming a first interconnector precursor 303-1 and a second interconnector precursor 303-2 and then co-firing the precursors (1250°C (inclusive) to 1400°C (exclusive)).

For example, the first interconnector precursor 303-1 and the second interconnector precursor 303-2 can be prepared as follows. At the outset, a raw material powder is prepared. The raw material powder can be prepared, for example, by a solid phase method. That is, powders of metal oxides as the raw material are weighed so as to provide a desired composition ratio. The powders are mixed in a solution, and the solvent is removed to obtain a powder. The powder is fired, for example, at 1150°C, followed by grinding to prepare a raw material powder. A solvent, for example, water or alcohol, and, if necessary, molding assistants such as dispersants and binders are added to the raw material powder to prepare a slurry or a paste. Each interconnector precursor can be obtained by coating the slurry or the paste, drying the slurry or the paste (80°C or more to 1100°C or less, preferably 300°C or more to 1100°C or less). The coating may be carried out by the same methods as described above. Alternatively, a method may be adopted in which each dried film is previously formed as a transfer sheet and the transfer film is applied to a lamination body.

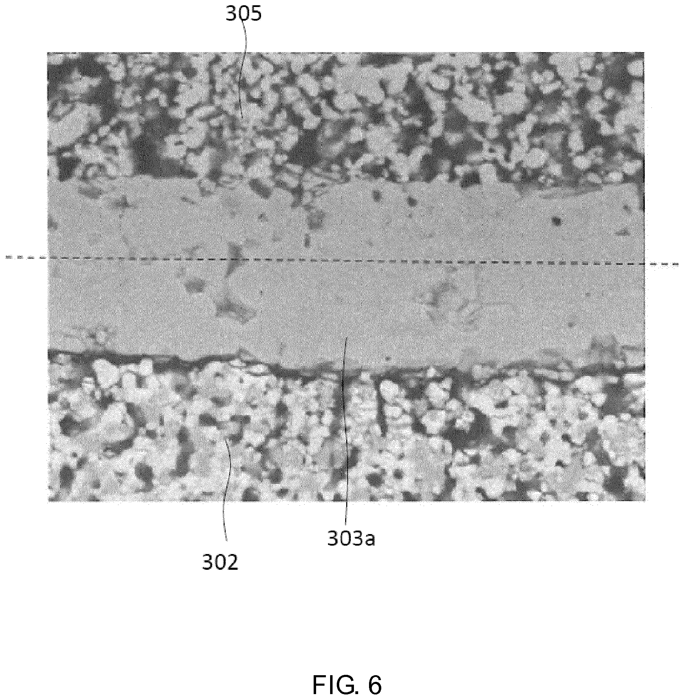

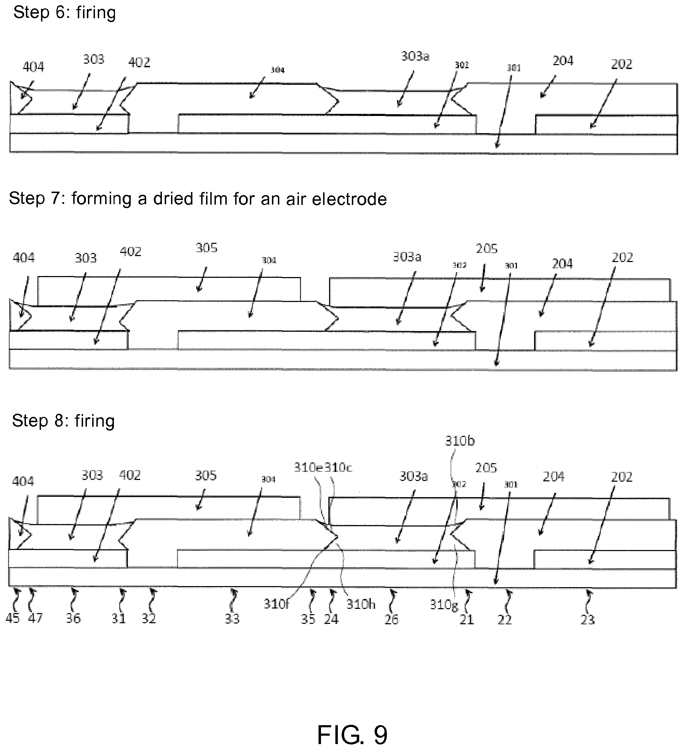

In another preferred embodiment of the manufacturing method according to the present invention, the interconnector 303 and the solid electrolyte (204, 304, 404) are formed by forming the first interconnector precursor 303-1, the second interconnector precursor 303-2, and a dried film for the solid electrolyte (204, 304, 404) and then co-firing (1250°C (inclusive) to 1400°C (exclusive)) the dried products. Specifically, the interconnector 303 and the solid electrolyte (204, 304, 404) are formed by a manufacturing method including the steps of: forming a first interconnector precursor 303-1: forming a dried film for a solid electrolyte (204, 304, 404) on the surface of the first interconnector precursor 303-1; forming a second interconnector precursor 303-2 on the surface of the first interconnector precursor 303-1 and the dried film for the solid electrolyte (204, 304, 404); and co-firing (1250°C (inclusive) to 1400°C (exclusive)) the first interconnector precursor 303-1, the dried film for the solid electrolyte (204, 304, 404), and the second interconnector precursor 303-2. This manufacturing method allows elements contained in the interconnector precursor (303-1, 303-2) and elements contained in the solid electrolyte (204, 304, 404) to be mutually diffused during co-firing. That is, when elements contained in the interconnector precursor (303-1, 303-2) are the same as those contained in the solid electrolyte (204, 304, 404), the elements are mutually diffused. Such elements include strontium and lanthanum and the like. This can improve adhesion between the interconnector and the solid electrolyte. Further, in the manufacturing method according to the present invention, as illustrated in Fig. 9 (step 8), preferably, before co-firing, a dried film for the solid electrolyte (204, 304) is formed in a part of the area between the first interconnector precursor 303-1 and the second interconnector precursor 303-2, so that the first interconnector precursor 303-1 and the second interconnector precursor 303-2 have a mutually contacted portion and a mutually non-contacted portion. That is, in the first interconnector precursor 303-1 and the second interconnector precursor 303-2, a dried film for the first solid electrolyte 204 and/or a dried film for the second solid electrolyte 304 are formed in a part of the area between the first interconnector precursor 303-1 and the second interconnector precursor 303-2. According to this construction, during co-firing, elements are mutually diffused in a portion where the interconnector precursors are in contact with each other (a dotted line portion in Fig. 6 described later), while elements are not mutually diffused in a portion where the interconnector precursors are not in contact with each other (303b, 303g, 303c, 303e, 303h, 303f, and 303i). In the portion where the interconnector precursors are not in contact with each other, since each of the precursors is in contact with the dried film for the solid electrolyte, element diffusion occurs between each of the precursors and the dried film for the solid electrolyte. Further, when a dried film for the first solid electrolyte 204 and/or a dried film for the second solid electrolyte 304 are formed in a part of the area between the first interconnector precursor 303-1 and the second interconnector precursor 303-2, since the solid electrolyte (204, 304) is dense, the gas sealing property of the interconnector 303 can be further improved.

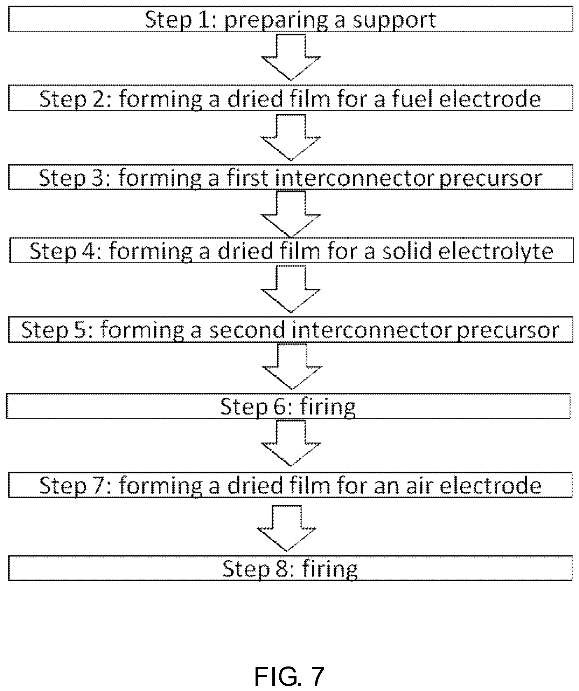

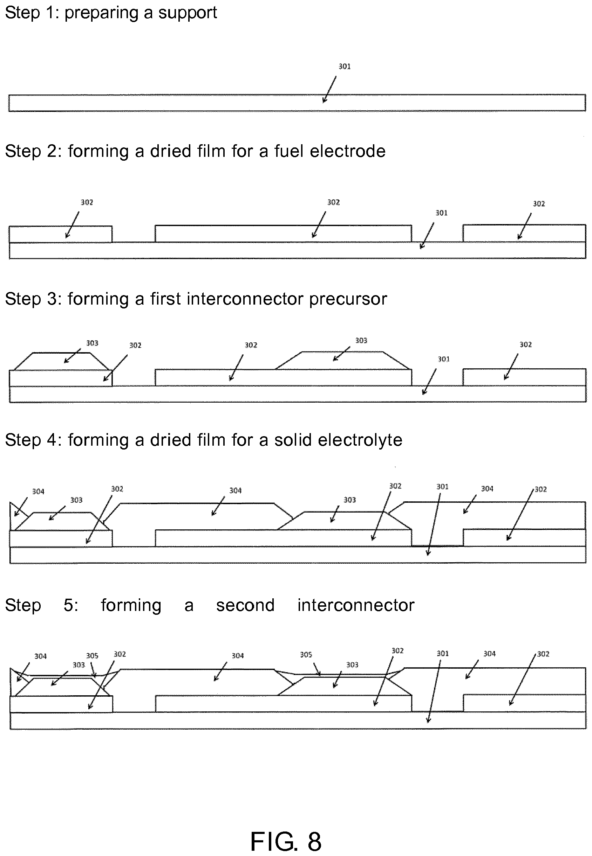

In a preferred embodiment of the manufacturing method according to the present invention, the manufacturing method includes the steps of: preparing a support 301 (step 1); forming a dried film for a fuel electrode (202, 302, 402) (step 2); forming a first interconnector precursor 303-1 (step 3); forming a dried film for a solid electrolyte (204, 304, 404) (step 4); forming a second interconnector precursor 303-2 (step 5); then co-firing (1250°C (inclusive) to 1400°C (exclusive)) a laminate composed of the support 301, the dried film for the fuel electrode (202, 302, 402), the first interconnector precursor 303-1, the solid electrolyte (204, 304, 404), and the second interconnector precursor 303-2 (step 6); then forming a dried film for an air electrode (205, 305, 405) (step 7); and firing (1100°C (inclusive) to 1400°C (exclusive), preferably 1250°C (inclusive) to 1400°C (exclusive)) the whole (step 8). A flow chart of the manufacturing method is shown in Fig. 7. An example of each step is illustrated in Figs. 8 and 9.

In the above embodiment of the manufacturing method according to the present invention, after the formation of the dried film for the fuel electrode (202, 302, 402), the first interconnector precursor 303-1, the dried film for the solid electrolyte (204, 304, 404), and the second interconnector precursor 303-2 on the support 301 or the calcination product for the support, the laminate composed of the above is fired at a time, that is, co-fired. In this embodiment, preferably, the firing is carried out under an oxidizing atmosphere so that the solid electrolyte (204, 304, 404) and the first and the second interconnector precursor (303-1 and 303-2) are not denatured, for example, due to diffusion of doapants. More preferably, firing is carried out under an atmosphere having an oxygen concentration of 20% by mass or more to 30% by mass or less using a mixed gas composed of air and oxygen.

In the above embodiment of the manufacturing method according to the present invention, preferably, at least the first interconnector precursor 303-1, the dried film for the solid electrolyte (204, 304, 404), and the second interconnector precursor 303-2 are co-fired (1250°C (inclusive) to 1400°C (exclusive)).

In the present invention, in the laminate, the second interconnector precursor 303-2 formed of SLT having a high Sr content and having a high reactivity with LSGM is formed on the surface of the dried film for the solid electrolyte (204, 304, 404) (for example, LSGM). Thus, the second interconnector precursor 303-2 and the dried film for the solid electrolyte (204, 304, 404) are reacted with each other through element diffusion occurred between them. Accordingly, adhesion between them are improved. As a result, gas sealing property between the solid electrolyte (204, 304, 404) and the interconnector 303 can be improved.

In another embodiment of the manufacturing method according to the present invention, preferably, the firing is carried out after each formation of dried films for individual member other than the first interconnector precursor 303-1, the dried film for the solid electrolyte (204, 304, 404), and the second interconnector precursor 303-2. That is, in this embodiment, the manufacturing method includes at least the steps of:

forming a dried film for a fuel electrode (202, 302, 402) on the surface of a dried film for a support 301 or a calcination product for the supportand then firing (1100°C (inclusive) to 1400°C (exclusive), preferably 1250°C (inclusive) to 1400°C (exclusive)) the dried films to form a fuel electrode (202, 302, 402);

forming a laminated molded body composed of the first interconnector precursor 303-1, the dried film for the solid electrolyte (204, 304, 404), and the second interconnector precursor 303-2 and then co-firing (preferably 1250°C (inclusive) to 1400°C (exclusive)) the laminated molded body to form a laminated fired product; and

forming a dried film for an air electrode (205, 305, 405) and firing (1100°C (inclusive) to 1400°C (exclusive), preferably 1250°C (inclusive) to 1400°C (exclusive)) the dried film together with the laminated fired product to form an air electrode (205, 305, 405). The formation of a current collecting layer is carried out after the formation of the air electrode (205, 305, 405).

EXAMPLES

The present invention is further illustrated by the following Examples and Comparative Examples that are not intended as a limitation of the scope of the present invention.

Example 1

Preparation of green body A for support

A raw material powder of a high-purity forsterite ($Mg_2SiO_4$ containing 0.05% by mass of CaO) was regulated to a mean particle diameter of 0.7 $\mu$m. 100 parts by weight of this powder, 20 parts by weight of a solvent (water), 8 parts by weight of a binder (methylcellulose), 0.5 part by weight of a lubricant, and 15 parts by weight of a pore forming agent (acrylic resin particles having a mean particle diameter of 5 $\mu$m) were mixed in a rapid mixer, the mixture was kneaded in a kneader, the kneaded product was deaerated with a vacuum pug mill to prepare a green body for extrusion molding The mean particle diameter was measured according to JIS R1629 and expressed in terms of 50% diameter (the same shall apply hereinafter).

Preparation of slurry for fuel electrode layer

A NiO powder and a 10YSZ (10 mol% $Y_2O_3$-90 mol% $ZrO_2$) power were mixed together by wet mixing at a weight ratio of 65 : 35 to obtain a dry powder. The dry powder thus obtained was regulated to a mean particle diameter of 0.7 $\mu$m. 150 parts by weight of this powder and 100 parts by weight of a solvent (carbitol) were mixed with 6 parts by weight of a binder (a soluble polymer), 2 parts by weight of a dispersant (a nonionic surfactant), and 2 parts by weight of an defoamer (organic polymeric substance-based). The mixture was thoroughly stirred to prepare a slurry.

Preparation of slurry for fuel electrode catalyst layer

A mixture of a NiO powder and a GDC10 (10 mol% GdO1.5-90 mol% CeO2) powder was prepared by a coprecipitation method and was heat-treated to obtain a powder for a fuel electrode catalyst layer. The mixing ratio between the NiO powder and the GDC10 powder was 50/50 in terms of weight ratio. The mean particle diameter of the powder for the fuel electrode catalyst layer was regulated to a mean particle diameter of 0.5 $\mu$m. 100 parts by weight of this powder was mixed with 100 parts by weight of a solvent (carbitol), 5 parts by weight of a binder (a soluble polymeric substance), 2 parts by weight of a dispersant (nonionic surfactant), and 2 parts by weight of an defoamer (an organic polymeric substance). The mixture was thoroughly stirred to prepare a slurry.

Preparation of slurry for reaction inhibitory layer

50 parts by weight of a powder of cerium-based composite oxide LDC40 (40 mol% LaO1.5-60 mol% CeO2) was used as a material for a reaction inhibitory layer. 0.04 part by weight of a $Ga_2O_3$ powder was mixed into the material powder as a sintering aid. Further, 100 parts by weight of a solvent (carbitol), 4 parts by weight of a binder (a soluble polymeric substance), 1 part by weight of a dispersant (a nonionic surfactant), and 1 part by weight of an defoamer (a organic polymeric substance) were mixed thereinto, and the mixture was thoroughly stirred to prepare a slurry.

Preparation of slurry for solid electrolyte

An LSGM powder having a composition of $La_{0.9}Sr_{0.1}Ga_{0.8}Mg_{0.2}O_3$ was used as a material for a solid electrolyte. 50 parts by weight of this LSGM powder was mixed with 100 parts by weight of a solvent (carbitol), 4 parts by weight of a binder (a soluble polymeric substance), 1 part by weight of a dispersant (a nonionic surfactant), and 1 part by weight of an defoamer (an organic polymeric substance). The mixture was thoroughly stirred to prepare a slurry.

Preparation of slurry for air electrode

A powder having a composition of $La_{0.6}Sr_{0.4}CO_{0.2}Fe_{0.8}O_3$ was used as a material for an air electrode. 40 parts by weight of this powder was mixed with 100 parts by weight of a solvent (carbitol), 2 parts by weight of a binder (a soluble polymeric substance), 1 part by weight of a dispersant (a nonionic surfactant), and 1 part by weight of an defoamer (an organic polymeric substance), and the mixture was thoroughly stirred to prepare a slurry.

Preparation of raw material powder for first interconnector precursor

A raw material powder for a first interconnector precursor was prepared by a solid phase method. Metal oxide powders as raw materials were weighed so that strontium, lanthanum, titanium, niobium, and iron were present at a composition ratio of a perovskite oxide represented by $Sr_{0.37}La_{0.52}Ti_{0.50}Nb_{0.10}Fe_{0.40}O_{3-\delta}$ and were mixed together in a solution. Thereafter, the solvent was removed to give a powder that was then fired at 1050°C and ground to prepare a raw material powder for a first interconnector precursor.

Preparation of slurry for first interconnector precursor

A raw material powder for a first interconnector precursor, the raw material powder having a composition of $Sr_{0.37}La_{0.52}Ti_{0.50}Nb_{0.10}Fe_{0.40}O_{3-\delta}$, was used as a material for a first interconnector precursor. 40 parts by weight of this powder was mixed with 100 parts by weight of a solvent (carbitol), 4 parts by weight of a binder (a soluble polymeric substance), 1 part by weight of a dispersant (a nonionic surfactant), and 1 part by weight of an defoamer (an organic polymeric substance). The mixture was thoroughly stirred to prepare a slurry.

Preparation of raw material powder for second interconnector precursor

A raw material powder for a second interconnector precursor was prepared by a solid phase method. Metal oxide powders as raw materials were weighed so that strontium, lanthanum, and titanium were present at a composition ratio of a perovskite oxide represented by $Sr_{0.90}La_{0.04}TiO_{3-\delta}$ and were mixed together in a solution. Thereafter, the solvent was removed to give a powder that was then fired at 1050°C and ground to prepare a raw material powder for a second interconnector precursor.

Preparation of slurry for second interconnector precursor

A raw material powder for a second interconnector precursor, the raw material powder having a composition of $Sr_{0.90}La_{0.04}TiO_{3}\text{-}\delta$, was used as a material for a second interconnector precursor. 40 parts by weight of this powder was mixed with 100 parts by weight of a solvent (carbitol), 4 parts by weight of a binder (a soluble polymeric substance), 1 part by weight of a dispersant (a nonionic surfactant), and 1 part by weight of an defoamer (an organic polymeric substance). The mixture was thoroughly stirred to prepare a slurry.

Preparation of solid oxide fuel cell stack

A solid oxide fuel cell stack was prepared by the following method using the green body and each of the slurries prepared above.

A cylindrical molded body was prepared from a green body A for a porous support by extrusion molding method. After drying at room temperature, the molded body was heat-treated at 1100°C for 2 hours to prepare a calcined body for a support. A fuel electrode layer, a fuel electrode catalyst layer, a first interconnector precursor, a reaction inhibitory layer, a solid electrolyte layer, and a second interconnector precursor were formed in that order on a surface of the support by a slurry coating method and were dried to obtain a laminated molded body including dried layers stacked. The laminated molded body was co-fired at 1300°C for 2 hours. During the firing, it is considered that mutual diffusion of elements occurs between the first and the second interconnector precursors and between the first and the second interconnector precursors and the solid electrolyte.

Next, an air electrode was molded on the surface of the solid electrolyte, and then fired at 1100°C for 2 hours to prepare a solid oxide fuel cell stack. The support had a dimension after co-firing of 10 mm in outer diameter and 1 mm in wall thickness. For the solid oxide fuel cell stack thus prepared, the thickness of the fuel electrode layer was 100 $\mu$m, the thickness of the fuel electrode catalyst layer was 10 $\mu$m, the thickness of the reaction inhibitory layer was 10 $\mu$m, the thickness of the solid electrolyte layer was 30 $\mu$m, the thickness of the interconnector was 15 $\mu$m, and the thickness of the air electrode was 20 $\mu$m. The outer diameter of the support was measured with a micrometer in a place where no layer was formed. The thickness of each of the members was determined by cutting the solid oxide fuel cell stack prepared, observing the cross section three times under a scanning electron microscope (SEM) at any magnification of 30 to 2000 times, adding the maximum value to the minimum value thus obtained and dividing the total value by 2. The cut place was a central portion of the area where the air electrode layer was formed. Fig. 6 is a SEM image of a laminated structure formed, as viewed from below, a second fuel electrode 302 in a second power generation element 30, an interconnector 303, and a first air electrode 205 in a first power generation element 20 in that order. The upper side of the dotted line is a portion derived from a second interconnector precursor 303-2, and the lower side of the dotted line is a portion derived from a first interconnector precursor 303-1. For the solid oxide fuel cell stack, each of the following evaluations was carried out. The results are shown in Table 1.

Examples 2 to 13

A solid oxide fuel cell stack was obtained in the same manner as in Example 1, except that the composition of the first interconnector precursor and the composition of the second interconnector precursor were those shown in Table 1. For the solid oxide fuel cell stacks thus obtained, the following evaluations were carried out. The results are shown in Table 1.

Comparative Example 1

A solid oxide fuel cell stack was obtained in the same manner as in Example 1, except that the first interconnector precursor was not provided and the composition of the second interconnector precursor was $Sr_{0.55}La_{0.30}TiO_{3-\delta}$. For the solid oxide fuel cell stack thus obtained, the following evaluations were carried out. The results are shown in Table 1.

Comparative Example 2

A solid oxide fuel cell stack was obtained in the same manner as in Example 1, except that the composition of the first interconnector precursor was $Sr_{0.40}La_{0.55}Ti_{0.50}Fe_{0.50}O_{3-\delta}$. For the solid oxide fuel cell stack thus obtained, the following evaluations were carried out. The results are shown in Table 1.

Evaluation

Analysis of composition and ratio of perovskite oxide contained in interconnector

The composition of the interconnector was identified by the following method. The interconnector was cut out from the prepared solid oxide fuel cell stack, followed by fabrication of the pieces into thin films having a thickness of 100 nm to 200 nm by FIB-SEM. Elemental mapping was obtained by evaluating the thin films by STEM-EDX. The composition ratio and the proportion of the perovskite oxide contained in the interconnector were determined by quantitatively analyzing the elemental mapping by a thin film approximation method. The results are shown in Table 1. As a result, it was confirmed that main components of the composition of the interconnector were the same as those of the composition of the raw material powder.

Measurement of OCV

A power generation test was carried out using the solid oxide fuel cell stack thus obtained. A current collector on the fuel electrode side was formed by cladding a current collecting metal to an exposed area of the fuel electrode with a silver paste. A current collector on the air electrode side was formed by cladding a current collecting metal to an exposed area of an adjacent fuel electrode with a silver paste.
A power generation test was carried out under the following power generation conditions, and the electromotive force 0 hour after the operation (OCV (V)) was measured. The results are shown in Table 1.

Fuel gas: mixed gas composed of ($H_2$+3%$H_2O$) and $N_2$ (mixed ratio $H_2$ : $N_2$ = 7 : 4 (vol : vol))
Oxidation gas: air
Operating temp.: 700°C

Measurement of critical fuel utilization factor

A power generation test was carried out while energizing at a current density of 0.4 A/cm$^2$ under the above conditions for the power generation test. Thereafter, the amount of the fuel gas supplied was gradually reduced, the amount of hydrogen supplied just before a rapid drop of the potential was measured, and the critical fuel utilization factor was calculated by the following equation. The results are shown in Table 1.

$$\text{Critical fuel utilization factor} = (\text{Amount of hydrogen used in power generation})/(\text{Amount of hydrogen supplied just before rapid drop of potential}) \times 100$$

The amount of hydrogen used in the power generation was determined by the formula; amount of current (C/s) x 60 (s) x 22.4 (L/mol) ÷ Faraday constant (C/mol) x 1/2 (valence) x number of power generation elements.

Measurement of terminal voltage

The voltage between terminals was measured under the following power generation conditions by connecting a potential wire and a current wire to the fuel electrode in one of the adjacent power generation elements and to the fuel electrode in the adjacent other power generation element. The results are shown in Table 1.

Fuel gas: mixed gas composed of ($H_2$ + 3%$H_2O$) and $N_2$ (mixed ratio $H_2$ : $N_2$ = 7 : 4 (vol : vol))
Fuel utilization: 7%
Oxidation gas: air
Operating temp.: 700°C
Current density: 0.4 A/cm$^2$

[Table 1]

| | Composition | | | OCV (V) | Terminal voltage (V) | Critical fuel utilization factor (%) |
|---|---|---|---|---|---|---|
| | First interconnector precursor | Second interconnector precursor | Interconnector | | | |
| Example 1 | $Sr_{0.37}La_{0.52}Ti_{0.50}Nb_{0.10}Fe_{0.40}O_{3-\delta}$ | $Sr_{0.90}La_{0.04}TiO_{3-\delta}$ | $Sr_{0.51}La_{0.39}Ti_{0.63}Nb_{0.09}Fe_{0.28}O_{3-\delta}$ | 1.15 | 0.62 | 69 |
| Example 2 | $Sr_{0.30}La_{0.60}Ti_{0.30}Nb_{0.10}Fe_{0.60}O_{3-\delta}$ | $Sr_{0.90}La_{0.04}TiO_{3-\delta}$ | $Sr_{0.42}La_{0.48}Ti_{0.50}Nb_{0.10}Fe_{0.40}O_{3-\delta}$ | 1.12 | 0.62 | 69 |
| Example 3 | $Sr_{0.29}La_{0.50}Ti_{0.50}Nb_{0.20}Fe_{0.30}O_{3-\delta}$ | $Sr_{0.90}La_{0.04}TiO_{3-\delta}$ | $Sr_{0.43}La_{0.39}Ti_{0.62}Nb_{0.17}Fe_{0.21}O_{3-\delta}$ | 1.13 | 0.62 | 69 |
| Example 4 | $Sr_{0.32}La_{0.50}Ti_{0.35}Nb_{0.25}Fe_{0.40}O_{3-\delta}$ | $Sr_{0.90}La_{0.04}TiO_{3-\delta}$ | $Sr_{0.46}La_{0.39}Ti_{0.53}Nb_{0.15}Fe_{0.32}O_{3-\delta}$ | 1.11 | 0.63 | 69 |
| Example 5 | $Sr_{0.37}La_{0.50}Ti_{0.50}Nb_{0.25}Fe_{0.50}O_{3-\delta}$ | $Sr_{0.90}La_{0.04}TiO_{3-\delta}$ | $Sr_{0.47}La_{0.40}Ti_{0.48}Nb_{0.18}Fe_{0.34}O_{3-\delta}$ | 1.13 | 0.64 | 69 |
| Example 6 | $Sr_{0.37}La_{0.55}Ti_{0.40}Nb_{0.10}Fe_{0.50}O_{3-\delta}$ | $Sr_{0.90}La_{0.04}TiO_{3-\delta}$ | $Sr_{0.50}La_{0.42}Ti_{0.57}Nb_{0.05}Fe_{0.38}O_{3-\delta}$ | 1.11 | 0.62 | 69 |
| Example 7 | $Sr_{0.40}La_{0.56}Ti_{0.30}Nb_{0.10}Fe_{0.60}O_{3-\delta}$ | $Sr_{0.90}La_{0.04}TiO_{3-\delta}$ | $Sr_{0.53}La_{0.45}Ti_{0.44}Nb_{0.08}Fe_{0.60}O_{3-\delta}$ | 1.10 | 0.62 | 69 |
| Example 8 | $Sr_{0.37}La_{0.52}Ti_{0.50}Nb_{0.10}Fe_{0.40}O_{3-\delta}$ | $Sr_{0.80}La_{0.10}TiO_{3-\delta}$ | $Sr_{0.43}La_{0.45}Ti_{0.62}Nb_{0.08}Fe_{0.30}O_{3-\delta}$ | 1.12 | 0.63 | 69 |
| Example 9 | $Sr_{0.30}La_{0.60}Ti_{0.30}Nb_{0.10}Fe_{0.60}O_{3-\delta}$ | $Sr_{0.80}La_{0.10}TiO_{3-\delta}$ | $Sr_{0.30}La_{0.60}Ti_{0.44}Nb_{0.08}Fe_{0.48}O_{3-\delta}$ | 1.11 | 0.62 | 69 |
| Example 10 | $Sr_{0.29}La_{0.50}Ti_{0.20}Nb_{0.20}Fe_{0.30}O_{3-\delta}$ | $Sr_{0.80}La_{0.10}TiO_{3-\delta}$ | $Sr_{0.40}La_{0.41}Ti_{0.55}Nb_{0.20}Fe_{0.25}O_{3-\delta}$ | 1.14 | 0.62 | 69 |
| Example 11 | $Sr_{0.37}La_{0.52}Ti_{0.50}Nb_{0.10}Fe_{0.40}O_{3-\delta}$ | $Sr_{0.95}La_{0.02}TiO_{3-\delta}$ | $Sr_{0.73}La_{0.20}Ti_{0.74}Nb_{0.05}Fe_{0.21}O_{3-\delta}$ | 1.13 | 0.62 | 69 |
| Example 12 | $Sr_{0.30}La_{0.60}Ti_{0.30}Nb_{0.10}Fe_{0.60}O_{3-\delta}$ | $Sr_{0.95}La_{0.02}TiO_{3-\delta}$ | $Sr_{0.65}La_{0.30}Ti_{0.65}Nb_{0.05}Fe_{0.30}O_{3-\delta}$ | 1.13 | 0.62 | 69 |
| Example 13 | $Sr_{0.29}La_{0.50}Ti_{0.50}Nb_{0.20}Fe_{0.30}O_{3-\delta}$ | $Sr_{0.95}La_{0.02}TiO_{3-\delta}$ | $Sr_{0.67}La_{0.23}Ti_{0.70}Nb_{0.10}Fe_{0.20}O_{3-\delta}$ | 1.15 | 0.61 | 69 |
| Comparative Example 1 | Free | $Sr_{0.55}La_{0.3}TiO_{3-\delta}$ | $Sr_{0.55}La_{0.3}TiO_{3-\delta}$ | 1.10 | 0.18 | 42 |
| Comparative Example 2 | $Sr_{0.4}La_{0.55}Ti_{0.5}Fe_{0.5}O_{3-\delta}$ | $Sr_{0.90}La_{0.04}TiO_{3-\delta}$ | $Sr_{0.63}La_{0.31}Ti_{0.70}Fe_{0.30}O_{3-\delta}$ | 1.03 | 0.59 | 7 |

**Claims**

1. A solid oxide fuel cell stack comprising:

   a plurality of power generation elements, each of which comprising a fuel electrode, a solid electrolyte, and an air electrode stacked in that order; and
   an interconnector that electrically connects the air electrode in one of adjacent power generation elements in the plurality of the power generation elements to the fuel electrode in the other power generation element, the plurality of power generation elements being connected in series to each other, **characterised in that**
   the interconnector is formed of a perovskite oxide represented by the following formula (1):

   $$Sr_aLa_bTi_{1-c-d}Nb_cFe_dO_{3-\delta} \qquad \text{formula (1)}$$

   wherein a, b, c, and d are a positive real number that satisfies $0.1 \leq a \leq 0.8$, $0.1 \leq b \leq 0.8$, $0.05 \leq c \leq 0.2$, and $0.2 \leq d \leq 0.5$, and the oxygen content $(3-\delta)$ is not more than 3.00, and
   the content of the perovskite oxide represented by the formula (1) in the interconnector is not less than 80% by mole.

2. The solid oxide fuel cell stack according to claim 1, wherein the interconnector has a compositional gradient within a composition range shown in the formula (1) in the thickness-wise direction.

3. The solid oxide fuel cell stack according to claim 1 or 2, which comprises an oxide ion insulating portion between the interconnector and the solid electrolyte in one power generation element and/or between the interconnector and the solid electrolyte in the other power generation element, and the oxide ion insulating portion is in contact with the interconnector and the solid electrolyte in the one power generation element and/or the solid electrolyte in the other power generation element.

4. The solid oxide fuel cell stack according to claim 3, wherein the oxide ion insulating portion comprises the following formula (2):

   $$Sr_xLa_yTiO_{3-\delta} \qquad \text{equation (2)}$$

   wherein x and y are a positive number that satisfies $0.8 \leq x + y \leq 1.0$ and $0.01 < y \leq 0.1$, and $\delta$ is a value that is required to meet a neutral condition of the electric charge.

5. The solid oxide fuel cell stack according to any one of claims 1 to 4, wherein the solid electrolyte is formed of a lanthanum gallate-based oxide doped with Sr and Mg.

6. The solid oxide fuel cell stack according to any one of claims 1 to 5, wherein the interconnector is formed by co-firing a first interconnector precursor that is formed on a surface of the fuel electrode and represented by the following formula (1'):

   $$Sr_aLa_bTi_{1-c-d}Nb_cFe_dO_{3-\delta} \qquad \text{formula (1')}$$

   wherein a, b, c, and d are a positive real number that satisfies $0.1 \leq a \leq 0.8$, $0.1 \leq b \leq 0.8$, $0.1 \leq c \leq 0.3$, and $0.3 \leq d \leq 0.6$, and the oxygen content $(3-\delta)$ is not more than 3.00, and
   a second interconnector precursor that is formed on a surface of the first interconnector precursor and represented by the following formula (2):

   $$Sr_xLa_yTiO_{3-\delta} \qquad \text{formula (2)}$$

   wherein x and y are a positive number that satisfies $0.8 \leq x + y \leq 1.0$ and $0.01 < y \leq 0.1$, and $\delta$ is a value that is required to meet a neutral condition of the electric charge.

7. The solid oxide fuel cell stack according to any one of claims 1 to 6, wherein the interconnector and the solid electrolyte is formed by co-firing
   the first interconnector precursor formed on the surface of the fuel electrode,
   a dried film of a solid electrolyte formed on the surface of the first interconnector precursor, and

the second interconnector precursor formed on the first interconnector precursor and the dried film of the solid electrolyte,

the dried film of the solid electrolyte in the one power generation element and/or the dried film of the solid electrolyte in the other power generation element are formed in a part of an area between the first interconnector precursor and the second interconnector precursor so that

the first interconnector precursor and the second interconnector precursor are or are not partially in contact with each other.

8. The solid oxide fuel cell stack according to claim 6 or 7, wherein, in the second interconnector precursor, the portion that is not in contact with the first interconnector precursor is formed of the formula (2).

9. A method for manufacturing a solid oxide fuel cell stack comprising:

a plurality of power generation elements, each of which comprising a fuel electrode, a solid electrolyte, and an air electrode stacked in that order; and

an interconnector that electrically connects the air electrode in one of adjacent power generation elements in the plurality of the power generation elements to the fuel electrode in the other power generation element, the plurality of power generation elements being connected in series to each other,

the method comprising the steps of:

forming the fuel electrode;
forming the interconnector;
forming the solid electrolyte; and
forming the air electrode, **characterised in that**
the interconnector is formed of a perovskite oxide represented by the following formula (1):

$$Sr_aLa_bTi_{1-c-d}Nb_cFe_dO_{3-\delta} \qquad \text{formula (1)}$$

wherein a, b, c, and d are a positive real number that satisfies $0.1 \leq a \leq 0.8$, $0.1 \leq b \leq 0.8$, $0.05 \leq c \leq 0.2$, and $0.2 \leq d \leq 0.5$, and the oxygen content $(3-\delta)$ is not more than 3.00, and

the content of the perovskite oxide represented by the formula (1) in the interconnector is not less than 80% by mole.

10. The method for manufacturing a solid oxide fuel cell stack according to claim 9, which comprises the steps of:

forming a first interconnector precursor of the following formula (1'):

$$Sr_aLa_bTi_{1-c-d}Nb_cFe_dO_{3-5} \qquad \text{formula (1')}$$

wherein a, b, c, and d are a positive real number that satisfies $0.1 \leq a \leq 0.8$, $0.1 \leq b \leq 0.8$, $0.1 \leq c \leq 0.3$, and $0.3 \leq d \leq 0.6$, and the oxygen content $(3-\delta)$ is not more than 3.00,

on the surface of the fuel electrode,
forming a second interconnector precursor of the following formula (2):

$$Sr_xLa_yTiO_{3-\delta} \qquad \text{formula (2)}$$

wherein x and y are a positive number that satisfies $0.8 \leq x + y \leq 1.0$ and $0.01 < y \leq 0.1$, and $\delta$ is a value that is required to meet a neutral condition of the electric charge on the surface of the first interconnector precursor, and

forming the interconnector by co-firing the first interconnector precursor and the second interconnector precursor.

11. The method for manufacturing a solid oxide fuel cell stack according to claim 10 comprising the steps of:

forming a dried film of the solid electrolyte on the surface of the first interconnector precursor;
forming the second interconnector precursor on the surface of the first interconnector precursor and the dried film of the solid electrolyte; and
forming the interconnector and the solid electrolyte by co-firing the first interconnector precursor, the dried film of the solid electrolyte, and the second interconnector precursor.

**12.** The method for manufacturing a solid oxide fuel cell stack according to claim 11, wherein the dried film of the solid electrolyte in one power generation element and/or the dried film of the solid electrolyte in the other power generation element are formed in a portion of an area between the first interconnector precursor and the second interconnector precursor so that the first interconnector precursor and the second interconnector precursor are or are not partially in contact with each other.

**Patentansprüche**

**1.** Ein Festoxid-Brennstoffzellenstapel, umfassend:

eine Vielzahl von Stromerzeugungselementen, von denen jedes in dieser Reihenfolge eine Brennstoffelektrode, einen Feststoffelektrolyten und eine Luftelektrode gestapelt umfasst; und
einen Interkonnektor, der die Luftelektrode in einem der benachbarten Stromerzeugungselemente in der Vielzahl der Stromerzeugungselemente mit der Brennstoffelektrode in dem anderen Stromerzeugungselement elektrisch verbindet, wobei die Vielzahl von Stromerzeugungselementen in Reihe miteinander verbunden sind, **dadurch gekennzeichnet, dass**
der Interkonnektor aus einem Perowskit-Oxid besteht, das durch die folgende Formel (1) dargestellt wird:

$$Sr_aLa_bTi_{1-c-d}Nb_cFe_dO_{3-\delta} \qquad \text{Formel (1)}$$

wobei a, b, c und d eine positive reelle Zahl sind, die die Bedingung $0,1 \leq a \leq 0,8$, $0,1 \leq b \leq 0,8$, $0,05 \leq c \leq 0,2$ und $0,2 \leq d \leq 0,5$ erfüllt, und wobei der Sauerstoffgehalt $(3-\delta)$ nicht mehr als 3,00 beträgt, und
der Gehalt des durch die Formel (1) dargestellten Perowskit-Oxids im Interkonnektor nicht weniger als 80 Mol.-% beträgt.

**2.** Der Festoxid-Brennstoffzellenstapel gemäß Anspruch 1, wobei der Interkonnektor einen Gradienten hinsichtlich der Zusammensetzung innerhalb eines in der Formel (1) dargestellten Bereiches der Zusammensetzung in Richtung der Dicke aufweist.

**3.** Der Festoxid-Brennstoffzellenstapel gemäß Anspruch 1 oder 2, der einen Oxidionen-Isolierabschnitt zwischen dem Interkonnektor und dem Feststoffelektrolyten in einem Stromerzeugungselement und/oder zwischen dem Interkonnektor und dem Feststoffelektrolyten in dem anderen Stromerzeugungselement umfasst, und der Oxidionen-Isolierabschnitt in Kontakt mit dem Interkonnektor und dem Feststofffelektrolyten in dem einen Stromerzeugungselement und/oder dem Feststoffelektrolyten in dem anderen Stromerzeugungselement steht.

**4.** Der Festoxid-Brennstoffzellenstapel gemäß Anspruch 3, wobei der Oxidionen-Isolierabschnitt die folgende Formel (2) umfasst:

$$Sr_xLa_yTiO_{3-\delta} \qquad \text{Gleichung (2)}$$

wobei x und y eine positive Zahl sind, die die Bedingung $0,8 \leq x + y \leq 1,0$ und $0,01 < y \leq 0,1$ erfüllt, und $\delta$ ein Wert ist, der erforderlich ist, um den neutralen Zustand der elektrischen Ladung zu erreichen.

**5.** Der Festoxid-Brennstoffzellenstapel gemäß irgendeinem der Ansprüche 1 bis 4, wobei der Feststoffelektrolyt aus einem mit Sr und Mg dotierten Lanthan-Gallat-basierten Oxid gebildet ist.

**6.** Der Festoxid-Brennstoffzellenstapel gemäß irgendeinem der Ansprüche 1 bis 5, wobei der Interkonnektor durch gleichzeitiges Brennen der Folgenden gebildet wird
einer Vorstufe eines ersten Interkonnektors, die auf einer Oberfläche der Brennstoffelektrode ausgebildet wird und durch die folgende Formel (1') dargestellt wird:

$$Sr_aLa_bTi_{1-c-d}Nb_cFe_dO_{3-\delta} \qquad \text{Formel (1'),}$$

wobei a, b, c und d eine positive reelle Zahl sind, die die Bedingung $0,1 \leq a \leq 0,8$, $0,1 \leq b \leq 0,8$, $0,1 \leq c \leq 0,3$ und $0,3 \leq d \leq 0,6$ erfüllt, und der Sauerstoffgehalt $(3-\delta)$ nicht mehr als 3,00 beträgt, und
einer Vorstufe eines zweiten Interkonnektors, die auf einer Oberfläche der Vorstufe des ersten Interkonnektors gebildet wird und durch die folgende Formel (2) dargestellt wird:

$$Sr_xLa_yTiO_{3-\delta} \qquad \text{Formel (2),}$$

wobei x und y eine positive Zahl sind, die die Bedingung $0,8 \leq x + y \leq 1,0$ und $0,01 < y \leq 0,1$ erfüllt und $\delta$ ein Wert ist, der erforderlich ist, um den neutralen Zustand der elektrischen Ladung zu erreichen.

7. Der Festoxid-Brennstoffzellenstapel gemäß irgendeinem der Ansprüche 1 bis 6, wobei der Interkonnektor und der Feststoffelektrolyt durch gleichzeitiges Brennen der Folgenden gebildet wird
der Vorstufe des ersten Interkonnektors, die auf der Oberfläche der Brennstoffelektrode ausgebildet wird,
wobei ein getrockneter Film aus einem Feststoffelektrolyten auf der Oberfläche der Vorstufe des ersten Interkonnektors gebildet wird, und
der Vorstufe des zweiten Interkonnektors, die auf der Vorstufe des ersten Interkonnektors und dem getrockneten Film des Feststoffelektrolyten ausgebildet wird,
wobei der getrocknete Film des Feststoffelektrolyten in dem einen Stromerzeugungselement und/oder der getrocknete Film des Feststoffelektrolyten in dem anderen Stromerzeugungselement in einem Teil einer Fläche zwischen der Vorstufe des ersten Interkonnektors und der Vorstufe des zweiten Interkonnektors ausgebildet werden, so dass die Vorstufe des ersten Interkonnektors und die Vorstufe des zweiten Interkonnektors teilweise in Kontakt miteinander stehen oder nicht.

8. Der Festoxid-Brennstoffzellenstapel gemäß Anspruch 6 oder 7, wobei in der Vorstufe des zweiten Interkonnektors der Bereich, der nicht mit der Vorstufe des ersten Interkonnektors in Kontakt steht, aus der Formel (2) gebildet ist.

9. Ein Verfahren zur Herstellung eines Festoxid-Brennstoffzellenstapels, umfassend:

eine Vielzahl von Stromerzeugungselementen, von denen jedes in dieser Reihenfolge eine Brennstoffelektrode, einen Feststoffelektrolyten und eine Luftelektrode gestapelt umfasst; und
einen Interkonnektor, der die Luftelektrode in einem der benachbarten Stromerzeugungselemente in der Vielzahl der Stromerzeugungselemente mit der Brennstoffelektrode in dem anderen Stromerzeugungselement elektrisch verbindet, wobei die Vielzahl von Stromerzeugungselementen in Reihe miteinander verbunden werden,
wobei das Verfahren die folgenden Schritte umfasst:

Bilden der Brennstoffelektrode;
Bilden des Interkonnektors;
Bilden des Feststoffelektrolyten; und
Bilden der Luftelektrode,
**dadurch gekennzeichnet, dass**
der Interkonnektor aus einem Perowskit-Oxid besteht, das durch die folgende Formel (1) dargestellt wird:

$$Sr_aLa_bTi_{1-c-d}Nb_cFe_dO_{3-\delta} \qquad \text{Formel (1)}$$

wobei a, b, c und d eine positive reelle Zahl sind, die die Bedingung $0,1 \leq a \leq 0,8$, $0,1 \leq b \leq 0,8$, $0,05 \leq c \leq 0,2$ und $0,2 \leq d \leq 0,5$ erfüllt, und dass der Sauerstoffgehalt $(3-\delta)$ nicht mehr als 3,00 beträgt, und der Gehalt des durch die Formel (1) dargestellten Perowskit-Oxids im Interkonnektor nicht weniger als 80 Mol.-% beträgt.

10. Das Verfahren zur Herstellung eines Festoxid-Brennstoffzellenstapels gemäß Anspruch 9, umfassend die Schritte:

Bilden einer Vorstufe des ersten Interkonnektors mit der folgenden Formel (1'):

$$Sr_aLa_bTi_{1-c-d}Nb_cFe_dO_{3-\delta} \qquad \text{Formel (1')}$$

wobei a, b, c und d eine positive reelle Zahl sind, die die Bedingung $0,1 \leq a \leq 0,8$, $0,1 \leq b \leq 0,8$, $0,1 \leq c \leq 0,3$ und $0,3 \leq d \leq 0,6$ erfüllt, und der Sauerstoffgehalt $(3-\delta)$ nicht mehr als 3.00 beträgt, auf der Oberfläche der Brennstoffelektrode,
Bilden einer Vorstufe des zweiten Interkonnektors mit der folgenden Formel (2):

$$Sr_xLa_yTiO_{3-\delta} \qquad \text{Formel (2)}$$

wobei x und y eine positive Zahl sind, die die Bedingung $0,8 \leq x + y \leq 1,0$ und $0,01 < y \leq 0,1$ erfüllen, und $\delta$ ein Wert ist, der erforderlich ist, um den neutralen Zustand der elektrischen Ladung zu erreichen,

auf der Oberfläche der Vorstufe des ersten Interkonnektors, und

Bilden des Interkonnektors durch gleichzeitiges Brennen der Vorstufe des ersten Interkonnektors und der Vorstufe des zweiten Interkonnektors.

11. Das Verfahren zur Herstellung eines Festoxid-Brennstoffzellenstapels gemäß Anspruch 10, umfassend die Schritte:

Bilden eines getrockneten Films des Feststoffelektrolyten auf der Oberfläche der Vorstufe des ersten Interkonnektors;

Bilden der Vorstufe des zweiten Interkonnektors auf der Oberfläche der Vorstufe des ersten Interkonnektors und des getrockneten Films des Feststoffelektrolyten; und

Bilden des Interkonnektors und des Feststoffelektrolyten durch gleichzeitiges Brennen der Vorstufe des ersten Interkonnektors, des getrockneten Films des Feststoffelektrolyten und der Vorstufe des zweiten Interkonnektors.

12. Das Verfahren zur Herstellung eines Festoxid-Brennstoffzellenstapels gemäß Anspruch 11, wobei der getrocknete Film des Feststoffelektrolyten in einem Stromerzeugungselement und/oder der getrocknete Film des Feststoffelektrolyten in dem anderen Stromerzeugungselement in einem Teil einer Fläche zwischen der Vorstufe des ersten Interkonnektors und der Vorstufe des zweiten Interkonnektors ausgebildet werden, so dass die Vorstufe des ersten Interkonnektors und die Vorstufe des zweiten Interkonnektors teilweise miteinander in Kontakt stehen oder nicht.

## Revendications

1. Empilement de pile à combustible d'oxyde solide comprenant :

plusieurs éléments de production de courant, dont chacun comprend une électrode à combustible, un électrolyte solide, et une électrode à air empilés dans cet ordre ; et

un interconnecteur qui connecte électriquement l'électrode à air dans un des éléments de production de courant adjacents dans les plusieurs éléments de production de courant à l'électrode à combustible dans l'autre élément de production de courant, les plusieurs éléments de production de courant étant connectés en série les uns aux autres, **caractérisé en ce que**

l'interconnecteur est formé d'un oxyde de perovskite représenté par la formule (1) suivante :

$$Sr_aLa_bTi_{1-c-d}Nb_cFe_dO_{3-\delta} \qquad \text{Formule (1)}$$

où a, b, c, et d sont des nombres réels positifs qui satisfont $0,1 \leq a \leq 0,8$, $0,1 \leq b \leq 0,8$, $0,05 \leq c \leq 0,2$, et $0,2 \leq d \leq 0,5$, et la teneur en oxygène $(3-\delta)$ est d'au plus 3,00, et

la teneur en l'oxyde de perovskite représenté par la formule (1) dans l'interconnecteur n'est pas inférieure à 80 % en mol.

2. Empilement de pile à combustible d'oxyde solide selon la revendication 1, où l'interconnecteur présente un gradient de composition dans un intervalle de composition représenté dans la formule (1) dans la direction d'épaisseur.

3. Empilement de pile à combustible d'oxyde solide selon la revendication 1 ou 2, lequel comprend une portion isolante d'ion oxyde entre l'interconnecteur et l'électrolyte solide dans un élément de production de courant et/ou entre l'interconnecteur et l'électrolyte solide dans l'autre élément de production du courant, et la portion isolante d'ion oxyde est en contact avec l'interconnecteur et l'électrolyte solide dans le un élément de production de courant et/ou l'électrolyte solide dans l'autre élément de production de courant.

4. Empilement de pile à combustible d'oxyde solide selon la revendication 3, où la partie isolante d'ion oxyde comprend la formule (2) suivante :

$$Sr_xLa_yTiO_{3-\delta} \qquad \text{Formule (2)}$$

où x et y sont des nombres positifs qui satisfont $0,8 \leq x + y \leq 1,0$ et $0,01 < y \leq 0,1$, et $\delta$ est une valeur qui est nécessaire pour répondre à un état neutre de la charge électrique.

**5.** Empilement de pile à combustible d'oxyde solide selon l'une quelconque des revendications 1 à 4, où l'électrolyte solide est formé d'un oxyde à base de gallate de lanthane dopé avec Sr et Mg.

**6.** Empilement de pile à combustible d'oxyde solide selon l'une quelconque des revendications 1 à 5, où l'interconnecteur est formé par co-cuisson
d'un premier précurseur d'interconnecteur qui est formé sur une surface de l'électrode à combustible et représenté par la formule (1') suivante :

$$Sr_aLa_bTi_{1-c-d}Nb_cFe_dO_{3-\delta} \qquad \text{Formule (1')}$$

où a, b, c, et d sont des nombres réels positifs qui satisfont $0,1 \le a \le 0,8$, $0,1 \le b \le 0,8$, $0,1 \le c \le 0,3$, et $0,3 \le d \le 0,6$, et la teneur en oxygène $(3-\delta)$ est d'au plus 3,00, et
d'un second précurseur d'interconnecteur qui est formé sur une surface du premier précurseur d'interconnecteur et représenté par la formule (2) suivante :

$$Sr_xLa_yTiO_{3-\delta} \qquad \text{Formule (2)}$$

où x et y sont des nombres positifs qui satisfont $0,8 \le x + y \le 1,0$ et $0,01 < y \le 0,1$, et $\delta$ est une valeur qui est nécessaire pour répondre à un état neutre de la charge électrique.

**7.** Empilement de pile à combustible d'oxyde solide selon l'une quelconque des revendications 1 à 6, où l'interconnecteur et l'électrolyte solide sont formés par co-cuisson
du premier précurseur d'interconnecteur formé sur la surface de l'électrode à combustible ;
d'un film séché d'un électrolyte solide formé sur la surface du premier précurseur d'interconnecteur, et
du second précurseur d'interconnecteur formé sur le premier précurseur d'interconnecteur et le film séché de l'électrolyte solide,
le film séché de l'électrolyte solide dans le premier élément de production de courant et/ou le film séché de l'électrolyte solide dans l'autre élément de production de courant sont formés dans une partie d'une surface entre le premier précurseur d'interconnecteur et le second précurseur d'interconnecteur de sorte que
le premier précurseur d'interconnecteur et le second précurseur d'interconnecteur sont ou ne sont pas partiellement en contact l'un avec l'autre.

**8.** Empilement de pile à combustible d'oxyde solide selon la revendication 6 ou 7, où, dans le second précurseur d'interconnecteur, la portion qui n'est pas en contact avec le premier précurseur d'interconnecteur est formée de la formule (2).

**9.** Procédé de fabrication d'un empilement de pile à combustible d'oxyde solide comprenant :

plusieurs éléments de production de courant, dont chacun comprend une électrode à combustible, un électrolyte solide, et une électrode à air empilés dans cet ordre, et
un interconnecteur qui connecte électriquement l'électrode à air dans un des éléments de production de courant adjacents dans les plusieurs éléments de production de courant à l'électrode à combustible dans l'autre élément de production de courant, les plusieurs éléments de production de courant étant connectés en série les uns aux autres,
le procédé comprenant les étapes de :

formation de l'électrode à combustible ;
formation de l'interconnecteur ;
formation de l'électrolyte solide ; et
formation de l'électrode à air, **caractérisé en ce que**
l'interconnecteur est formé d'un oxyde de perovskite représenté par la formule (1) suivante :

$$Sr_aLa_bTi_{1-c-d}Nb_cFe_dO_{3-\delta} \qquad \text{Formule (1)}$$

où a, b, c, et d sont des nombres réels positifs qui satisfont $0,1 \le a \le 0,8$, $0,1 \le b \le 0,8$, $0,05 \le c \le 0,2$, et $0,2 \le d \le 0,5$, et la teneur en oxygène $(3-\delta)$ est d'au plus 3,00, et
la teneur en l'oxyde de perovskite représenté par la formule (1) dans l'interconnecteur n'est pas inférieure à 80 % en mol.

**10.** Procédé de fabrication d'un empilement de pile à combustible d'oxyde solide selon la revendication 9, lequel comprend les étapes de :

formation d'un premier précurseur d'interconnecteur de la formule (1') suivante :

$$Sr_aLa_bTi_{1-c-d}Nb_cFe_dO_{3-\delta} \qquad \text{Formule (1')}$$

où a, b, c, et d sont des nombres réels positifs qui satisfont $0{,}1 \leq a \leq 0{,}8$, $0{,}1 \leq b \leq 0{,}8$, $0{,}1 \leq c \leq 0{,}3$, et $0{,}3 \leq d \leq 0{,}6$, et la teneur en oxygène $(3-\delta)$ est d'au plus $3{,}00$,
sur la surface de l'électrode à combustible,
formation d'un second précurseur d'interconnecteur de la formule (2) suivante :

$$Sr_xLa_yTiO_{3-\delta} \qquad \text{Formule (2)}$$

où x et y sont des nombres positifs qui satisfont $0{,}8 \leq x + y \leq 1{,}0$ et $0{,}01 < y \leq 0{,}1$, et $\delta$ est une valeur qui est nécessaire pour répondre à un état neutre de la charge électrique sur la surface du premier précurseur d'interconnecteur, et
formation de l'interconnecteur par co-cuisson du premier précurseur d'interconnecteur et du second précurseur d'interconnecteur.

**11.** Procédé de fabrication d'un empilement de pile à combustible d'oxyde solide selon la revendication 10 comprenant les étapes de :

formation d'un film séché de l'électrolyte solide sur la surface du premier précurseur d'interconnecteur ;
formation du second précurseur d'interconnecteur sur la surface du premier précurseur d'interconnecteur et du film séché de l'électrolyte solide ; et
formation de l'interconnecteur et de l'électrolyte solide par co-cuisson du premier précurseur d'interconnecteur, du film séché de l'électrolyte solide, et du second précurseur d'interconnecteur.

**12.** Procédé de fabrication d'un empilement de pile à combustible d'oxyde solide selon la revendication 11, dans lequel le film séché de l'électrolyte solide dans un élément de production de courant et/ou le film séché de l'électrolyte solide dans l'autre élément de production de courant sont formés dans une portion d'une surface entre le premier précurseur d'interconnecteur et le second précurseur d'interconnecteur de sorte que le premier précurseur d'interconnecteur et le second précurseur d'interconnecteur sont ou ne sont pas partiellement en contact l'un avec l'autre.

(A)

X
↑
Z ⊙ ——→ Y

FIG. 1A

(B)

210

40
405a
404a
405b
404b
402b
402a
301
303

30
304a
304b
304b
305a
305b
304a
302b
302a
302b
302a
301a
301
303

20
204a
204b
204a
204b
205a
205b
202b
202a
202a
301
303

10
105b
104a
105a
104b
102b
102a

EP 3 002 811 B1

32

Z
X ← ⊗ → Y

FIG. 1B

FIG. 2

FIG. 3

FIG. 4

FIG. 5

305

302    303a

FIG. 6

Step 1: preparing a support

⬇

Step 2: forming a dried film for a fuel electrode

⬇

Step 3: forming a first interconnector precursor

⬇

Step 4: forming a dried film for a solid electrolyte

⬇

Step 5: forming a second interconnector precursor

⬇

Step 6: firing

⬇

Step 7: forming a dried film for an air electrode

⬇

Step 8: firing

FIG. 7

Step 1: preparing a support

Step 2: forming a dried film for a fuel electrode

Step 3: forming a first interconnector precursor

Step 4: forming a dried film for a solid electrolyte

Step 5: forming a second interconnector

# FIG. 8

Step 6: firing

Step 7: forming a dried film for an air electrode

Step 8: firing

FIG. 9

**EP 3 002 811 B1**

**REFERENCES CITED IN THE DESCRIPTION**

**Patent documents cited in the description**

- JP 2013030270 A
- JP 2010212036 A
- JP 2010186645 A